# EUROPEAN PATENT SPECIFICATION

(11) **EP 3 518 579 B1**
(45) Date of publication and mention of the grant of the patent: **21.01.2026**
(21) Application number: 17853109.1
(22) Date of filing: 21.09.2017
(51) Int. Cl.: H04W 72/04, H04W 28/18, H04J 1/00

(54) **USER TERMINAL AND WIRELESS COMMUNICATION METHOD**
BENUTZERENDGERÄT UND DRAHTLOSKOMMUNIKATIONSVERFAHREN
TERMINAL UTILISATEUR ET PROCÉDÉ DE COMMUNICATION SANS FIL

(30) Priority: 21.09.2016 JP 2016184788
(43) Date of publication of application: 31.07.2019
(73) Proprietor: NTT DOCOMO, INC., Chiyoda-ku Tokyo 100-6150 (JP)
(72) Inventor: TAKEDA, Kazuki, Tokyo 100-6150 (JP); TAKEDA, Kazuaki, Tokyo 100-6150 (JP); NAGATA, Satoshi, Tokyo 100-6150 (JP); MU, Qin, Beijing 100190 (CN); LIU, Liu, Beijing 100190 (CN); WANG, Lihui, Beijing 100190 (CN); JIANG, Huiling, Beijing 100190 (CN)
(74) Representative: Hoffmann Eitle
(86) International application number: PCT/JP2017/034015
(87) International publication number: WO 2018/056339

(56) References cited:
- EP-A2- 2 632 077
- WO-A1-2010/129606
- WO-A1-2015/062051
- WO-A1-2015/093851
- JP-A- 2014 053 955
- US-A1- 2013 083 753
- US-A1- 2015 271 790
- US-A1- 2016 278 054
- NTT DOCOMO: "Initial views on DL control channel design", vol. RAN WG1, no. Lisbon, Portugal; 20161010 - 20161014, 9 October 2016 (2016-10-09), XP051150083, Retrieved from the Internet <URL:http://www.3gpp.org/ftp/Meetings_3GPP_SYNC/RAN1/Docs/> [retrieved on 20161009]
- LG ELECTRONICS: "Discussion on CSS configuration for wideband operation", vol. RAN WG1, no. Hangzhou, China; 20170515 - 20170519, 6 May 2017 (2017-05-06), XP051261967, Retrieved from the Internet <URL:http://www.3gpp.org/ftp/tsg_ran/WG1_RL1/TSGR1_89/Docs/> [retrieved on 20170506]
- PANASONIC: "Use of multiple numerologies in NR", 3GPP TSG-RAN WG1#86 R1-167439, 26 August 2016 (2016-08-26), XP051140672

## Description

### Technical Field

The present invention relates to a user terminal and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower latency and so on (see non-patent literature 1). Also, the specifications of LTE-A (also referred to as "LTE-advanced," "LTE Rel. 10," "LTE Rel. 11," or "LTE Rel. 12") have been drafted for further broadbandization and increased speed beyond LTE (also referred to as "LTE Rel. 8" or "LTE Rel. 9"), and successor systems of LTE (also referred to as, for example, "FRA (Future Radio Access)," "5G (5th generation mobile communication system)," "5G+ (plus)," "NR (New Radio)," "NX (New radio access)," "New RAT(Radio Access Technology)," "FX (Future generation radio access)," "LTE Rel. 13," "LTE Rel. 14," "LTE Rel. 15" or later versions) are under study.

In LTE Rel. 10/11, carrier aggregation (CA) to integrate multiple component carriers (CC) is introduced in order to achieve broadbandization. Each CC is configured with the system bandwidth of LTE Rel. 8 as one unit. Furthermore, in CA, a plurality of CCs of the same radio base station (referred to as an "eNB (evolved Node B)," a "BS (Base Station)" and so on) are configured in a user terminal (UE (User Equipment)).

Meanwhile, in LTE Rel. 12, dual connectivity (DC), in which multiple cell groups (CGs) formed by different radio base stations are configured in a UE, is also introduced. Each cell group is comprised of at least one cell (CC). In DC, since multiple CCs of different radio base stations are integrated, DC is also referred to as "inter-eNB CA."

Also, in LTE Rel. 8 to 12, frequency division duplex (FDD), in which downlink (DL) transmission and uplink (UL) transmission are made in different frequency bands, and time division duplex (TDD), in which DL transmission and UL transmission are switched over time and made in the same frequency band, are introduced.

Also, in LTE Rel. 8 to 12, HARQ (Hybrid Automatic Repeat reQuest)-based data retransmission control is used. UE and/or a base station receive delivery acknowledgment information (also referred to as "HARQ-ACK," "ACK/NACK," and so on) in response to transmitted data, and judge whether or not the data is to be retransmitted, based on this information.

US 2015/271790 relates to relates to a method and an apparatus for a terminal for receiving control information in a wireless communication system. More specifically, the method comprises a step for monitoring an enhanced physical downlink control channel (EPDCCH) set comprised in an EPDCCH, wherein an aggregation level for monitoring the EPDCCH set is determined according to the configuration regarding the EPDCCH set.

### Citation List

### Non-Patent Literature

Non-Patent Literature 1: 3GPP TS36.300 V8.12.0 "Evolved Universal Terrestrial Radio Access (E-UTRA) and Evolved Universal Terrestrial Radio Access Network (E-UTRAN); Overall Description; Stage 2 (Release 8)," April, 2010

### Summary of Invention

### Technical Problem

Future radio communication systems (for example, 5G, NR, etc.) are expected to realize various radio communication services so as to fulfill varying requirements (for example, ultra-high speed, large capacity, ultra-low latency, etc.).

For example, regarding 5G/NR, studies are in progress to provide radio communication services, referred to as "eMBB (enhanced Mobile Broad Band)," "IoT (Internet of Things)," "mMTC (massive Machine Type Communication)," "M2M (Machine To Machine)," and "URLLC (Ultra Reliable and Low Latency Communications)."

In addition, 5G/NR is expected to support flexible use of numerologies and frequencies, and realize a dynamic frame structures. A "numerology" refers to, for example, a set of communication parameters (for example, subcarrier spacing, bandwidth, etc.) applied when transmitting/receiving certain signals.

However, if multiple numerologies are used and yet control methods for existing LTE are used on an as-is basis, there is a possibility that downlink control channels cannot be decoded, and a drop in throughput, a deterioration in the quality of communication and so on might surface as problems.

The present invention has been made in view of the above, and it is therefore an object of the present invention to provide a user terminal and a radio communication method that allow communication based on appropriate numerologies even when multiple numerologies are used.

The invention is defined by the independent claims and preferred embodiments are reflected in the dependent claims.

### Solution to Problem

According to one aspect of the present invention, a user terminal has a receiving section that monitors downlink control information by assuming a plurality of communication parameters that relate to a frequency domain and/or a time domain, and a control section that judges that at least part of parameters that relate to a search space for monitoring the downlink control information is different, for each of the communication parameters.

### Advantageous Effects of Invention

According to the present invention, it is possible to communicate based on appropriate numerologies even when multiple numerologies are used.

### Brief Description of Drawings

FIG. 1 is a diagram to show search space-related parameters that might be used in existing LTE;
FIG. 2 is a diagram to show examples of downlink control channel candidates when a plurality of SCSs are used;
FIG. 3 is a diagram to show examples of search space-related parameters that simply correspond to multiple numerologies;
FIG. 4 is a diagram to show examples of search space-related parameters according to example 1.1;
FIG. 5 is a diagram to show examples of search space-related parameters according to example 1.2;
FIG. 6 is a diagram to show examples of search space-related parameters according to example 1.3;
FIG. 7 is a diagram to show an example of search space-related parameters according to example 1.4;
FIG. 8 is a diagram to show examples of search space-related parameters according to example 1.5;
FIG. 9 is a diagram to show examples of search space-related parameters according to example 1.6;
FIG. 10 is a diagram to show examples of search space-related parameters according to example 1.7;
FIGs. 11A to 11C are diagrams to show examples in which signals of multiple numerologies are time-division-multiplexed (TDM)/frequency-division-multiplexed (FDM);
FIGs. 12A and 12B are diagrams to show examples of downlink control channel candidates, which might be used when multiple numerologies are used;
FIG. 13 is a diagram to show examples of selecting multiple search space-related parameters when the number of BDs is limited;
FIG. 14 is a diagram to show an exemplary schematic structure of a radio communication system;
FIG. 15 is a diagram to show an exemplary overall structure of a radio base station;
FIG. 16 is a diagram to show an exemplary functional structure of a radio base station;
FIG. 17 is a diagram to show an exemplary overall structure of a user terminal;
FIG. 18 is a diagram to show an exemplary functional structure of a user terminal; and
FIG. 19 is a diagram to show an exemplary hardware structure of a radio base station and a user terminal.

The invention is discussed below in the combination of what is referred to as Embodiments 3 and 4, neither of which alone fully reflects the subject matter of the independent claims. Each addresses a separate aspect of the independent claims. The terminology is retained for illustration purposes.

### Description

In existing LTE systems, a base station transmits downlink control information (DCI) to UEs by using downlink control channels (for example, PDCCH (Physical Downlink Control CHannel), enhanced PDCCH (EPDCCH) and so on).

DCI may be, for example, scheduling information. DCI that schedules receipt of DL data and/or measurements of DL reference signals may be referred to as "DL assignment" or "DL grant," and DCI that schedules transmission of UL data and/or transmission of UL sounding (measurement) signals may be referred to as "UL grant." In addition, DCI for scheduling UL control signals (UCI (Uplink Control Information)) may be defined.

UE is configured to monitor a set of a predetermined number of downlink control channel candidates. Monitoring here means, for example, attempting to decode each downlink control channel in the set for a target DCI format. Such decoding is also referred to as "blind decoding (BD)" or "blind detection." A downlink control channel candidate is also referred to as a "BD candidate," a "(E)PDCCH candidate," and so on.

A set of PDCCH candidates to be monitored is also referred to as "search space." The UE performs blind decoding for one or more resource candidates in a search space, and detects DCI addressed to the UE.

In existing LTE (LTE Rel. 8 to 12), multiple aggregation levels (ALs) are defined for search spaces, so as to enable link adaptation. The AL corresponds to the number of control channel elements (CCEs)/enhanced control channel elements (ECCEs) that constitute DCI. Also, a search space is configured so that there are multiple downlink control channel candidates for a given AL.

Cyclic redundancy check (CRC) bits are attached to DCI. These CRC bits are masked (scrambled) using UE-specific identifiers (for example, cell-radio network temporary identifiers (C-RNTIs)) or system-common identifiers. The UE can detect DCI in which the CRC bits are scrambled based on its own C-RNTI.

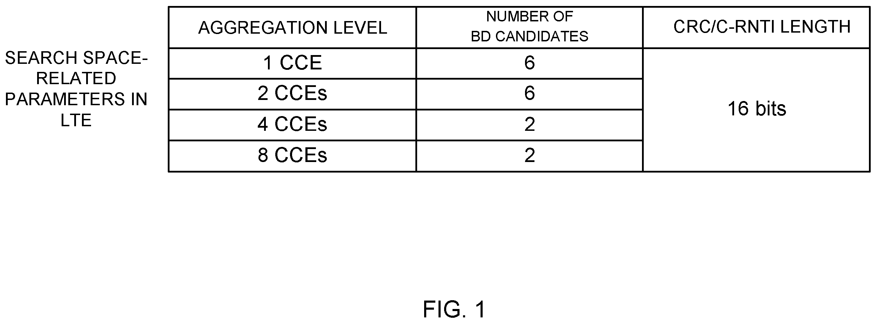

FIG. 1 is a diagram to show search space-related parameters that might be used in existing LTE. Search space-related parameters for specifying the format of a search space may include the AL, the number of BD candidates, and the CRC/C-RNTI length. The CRC/C-RNTI length may be referred to as "CRC bit length" and so on. Although FIG. 1 shows UE-specific search spaces for use for transmitting UE-specific DCIs, common search spaces are also defined based on similar parameters.

For UE-specific search spaces in existing LTE, the ALs (=the numbers of CCEs) are 1, 2, 4 and 8. In relationship to the ALs = 1, 2, 4 and 8, the numbers of BD candidates 6, 6, 2 and 2 are defined, respectively. The CRC/C-RNTI length is sixteen bits.

Now, 5G/NR is anticipated to support flexible use of numerologies and frequencies, and realize dynamic frame structures. Here, a numerology refers to a set of frequency-domain and/or time domain-communication parameters (for example, at least one of subcarrier spacing (SCS), the bandwidth, the duration of symbols, the duration of cyclic prefixes (CPs), the length of transmission time intervals (TTIs), the number of symbols per TTI, the structure of radio frames, the filtering process, the windowing process and so on).

For example, envisaging NR, research is underway to support multiple numerologies and apply varying numerologies to different communication services. For example, large SCS might be applied to URLLC for reduced latency, while small SCS might be applied to mMTC for reduced power consumption.

However, no studies have been done so far on search spaces that support such multiple numerologies. That is, in existing LTE, the SCS has been fixed at 15 kHz, and UE has heretofore decoded BD candidates on assumption that only one SCS (= 15 kHz) is used. On the other hand, in the event NR is employed, even if only one carrier is in use, the value of SCS can be determined based on variable (scalable) numerologies -- for example, a selection can be made from 15 kHz, 30 kHz, 60 kHz, 120 kHz, 240 kHz and so on. Also, in a single carrier, signals, to which multiple SCSs are applied respectively, can be transmitted and received at the same time.

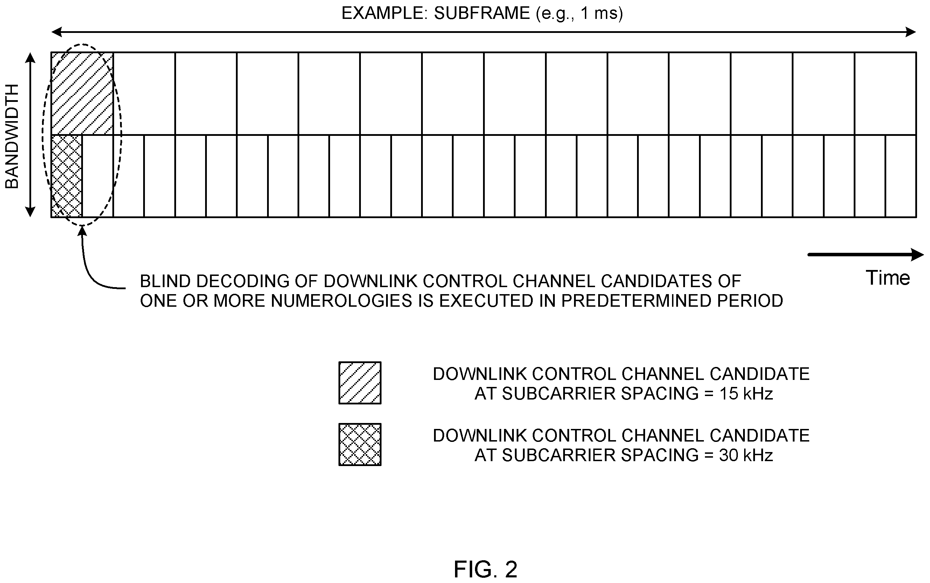

FIG. 2 is a diagram to show examples of downlink control channel candidates when a plurality of SCSs are used. FIG. 2 shows a predetermined range of radio resources in a given carrier. In this example, one subframe (for example, 1 ms) and a predetermined bandwidth are shown, defining the "predetermined range." The predetermined bandwidth may be the system bandwidth, or may be a subband, a predetermined number of resource blocks and so on. Note that signals of a plurality of SCSs may be all or partly superimposed on the same resource. Also, downlink control channel candidates of varying SCSs may be transmitted and received in different cycles.

In the example of FIG. 2, UE needs to blind-decode downlink control channels of multiple numerologies (here, multiple SCSs) at the same time, in a predetermined period (in the top symbol of the subframe). In existing LTE, it is not possible to blind-decode the downlink control channel of SCS=30 kHz.

In this way, if search spaces for existing LTE are used in NR on an as-is basis, there is a possibility that downlink control channels cannot be decoded, and this might lead to problems such as a drop in throughput, a deterioration in the quality of communication and so on.

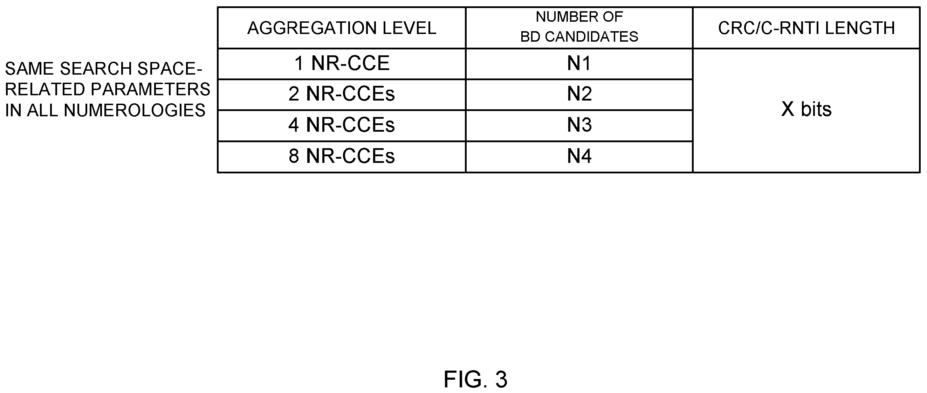

So the present inventors have worked on a search space design that can support multiple numerologies. To put it simply, it may be possible to make all the search space-related parameters the same in all numerologies, and provide search spaces based on respective numeracies. FIG. 3 is a diagram to show examples of search space-related parameters that simply correspond to a plurality of numerologies.

In this example, the same supported aggregation levels (supported ALs), which apply to search spaces of all numerologies in common, are defined. Supported aggregation levels may be referred to as "aggregation levels that are supported," and so on. In FIG. 3, one, two, four, and eight are defined as supported ALs for respective search spaces. Each AL may indicate the number of CCEs for NR (NR-CCEs), which are different from existing (E)CCEs.

Also, in all numerologies, the same numbers of BD candidates -- namely, N1, N2, N3 and N4 (each an arbitrary number) -- are defined in relationship to ALs = 1, 2, 4 and 8, respectively. Also, the same CRC/C-RNTI length -- that is, X bits (arbitrary number) -- is defined in all numerologies.

Based on the configurations shown in FIG. 3, UE can receive (decode) downlink control channels of different numerologies separately, at the same timing. However, given that the UE needs to perform blind decoding the same number of times for each different numerology, it is preferable if search space-related parameters can be configured differently per numerology.

Having studied the above, the present inventors have come up with a design of a search space and a downlink control channel that allow communication based on appropriate numerologies even when multiple numerologies are used.

Now, embodiments of the present invention will be described in detail below with reference to the accompanying drawings. Note that the radio communication methods according to the herein-contained embodiments may be used individually or may be used in combination.

Note that, although UE blind-decodes search spaces associated with multiple different numerologies in one or more carriers, this is by no means limiting. For example, the UE may blind-decode search spaces shown in at least one of the following embodiments.

Also, although the following embodiments will be described on assumption that a search space is a UE-specific search space, this is by no means limiting. A search space may be re-interpreted as a "common search space," may be interpreted as a "UE-specific search space and/or UE common search space," or may be interpreted as another search space.

### (Radio Communication Method)

### <First example>

The first example of the present invention defines different search space-related parameters for different numerologies. Since this embodiment can be implemented in several patterns, each pattern will be described below (as example 1.1 to 1.7).

UE blind-decodes downlink control channels per search space, where each search space is defined based on different search space-related parameters.

### [Example 1.1]

According to this example . of the present invention, different supported aggregation levels are defined for each different numerology.

These supported ALs may be completely different between different numerologies, or may partially overlap. Also, aggregation levels that are supported in one numerology may constitute a subset of supported ALs in another numerology. Note that, as mentioned earlier, the AL of each search space may indicate the number of CCEs for NR (NR-CCEs), which are different from existing (E)CCEs (the same with the following embodiments).

At a given AL, the same numbers of BD candidates are defined between different numerologies. Also, the CRC/C-RNTI length is defined the same between different numerologies.

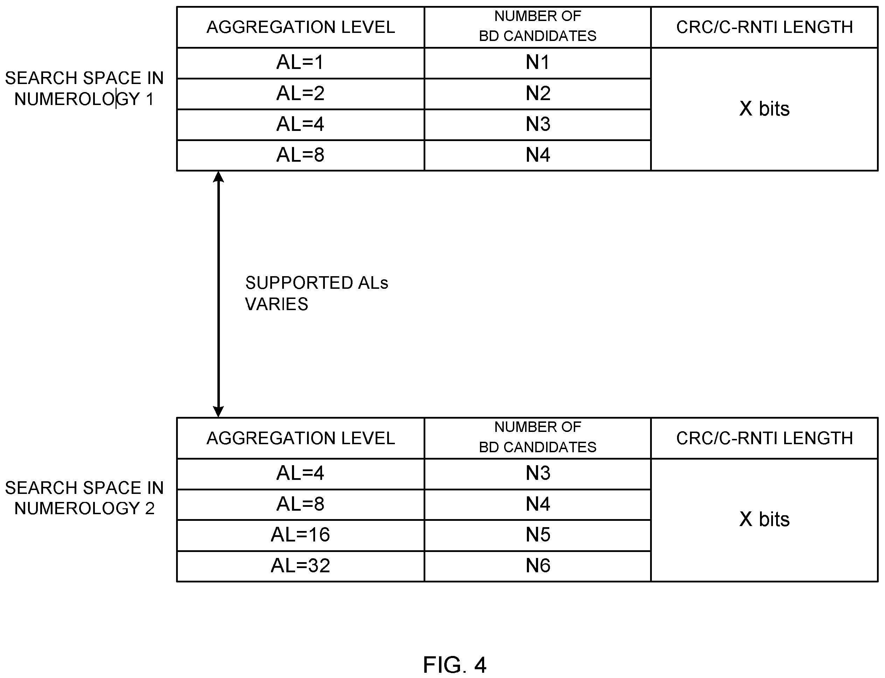

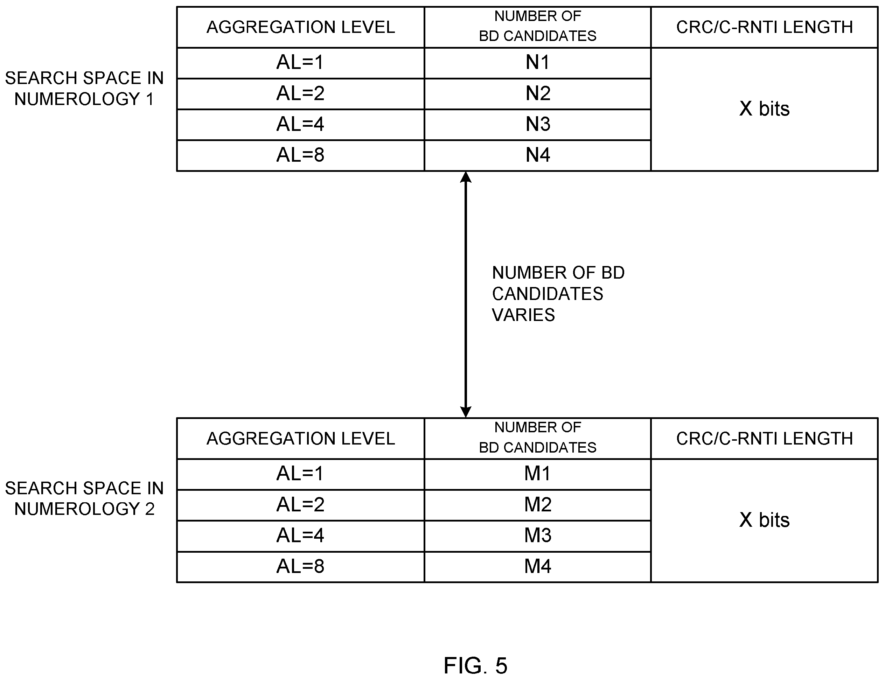

FIG. 4 is a diagram to show examples of search space-related parameters according to this example. FIG. 4 shows respective search space-related parameters for two different numerologies (numerology 1 and numerology 2) (the same holds for FIG. 5 to FIG. 10, which will be described later).

The ALs that are supported in numerology 1 (the first numerology) are 1, 2, 4, and 8. On the other hand, numerology 2 (the second numerology) supports the ALs 4, 8, 16 and 32. In this example, the ALs = 4 and 8 are defined in a duplicated manner between the two numerologies.

Furthermore, in each numerology, the number of BD candidates for AL = 4 is N3, and the number of BD candidates for AL = 8 is N4. No special limitations need to be set on the number of BD candidates (here, N1, N2, N5 and N6) for ALs that are not common between the two numerologies.

Also, the CRC/C-RNTI length is defined to be X bits, and is the same between the two numerologies.

According to example 1.1, when search spaces are provided in multiple numerologies, each numerology's search space is configured with different ALs, so that when, for example, each numerology is used to schedule data for different services, it is possible to improve reliability, and, furthermore, reduce the loss of resource efficiency. For example, high ALs can be configured in numerologies for providing services of low latency and high reliability such as URLLC, and low ALs can be configured in numerologies for providing services of high efficiency such as eMBB.

### [Example 1.2]

According to example 1.2 of the present invention, different numbers of BD candidates are defined for predetermined ALs of different numerologies.

The same supported ALs are defined between different numerologies. Also, the same CRC/C-RNTI length is defined between different numerologies.

Meanwhile, at a given AL, the number of BDs is defined to vary between different numerologies. The number of BD candidates may vary between numerologies at all ALs, or vary between numerologies at only some of the ALs.

FIG. 5 is a diagram to show examples of search space-related parameters according to example 1.2. The same supported ALs -- namely 1, 2, 4, and 8 -- are defined in each of the two numerologies. Also, the same CRC/C-RNTI length, X bits, is defined in each of the two numerologies.

At ALs = 1, 2, 4 and 8, the numbers of BD candidates in numerology 1 are set to N1, N2, N3 and N4, and, meanwhile, the numbers of BD candidates in numerology 2 are set to M1, M2, M3 and M4 (for example, N1≠M1, N2≠M2, N3≠M3, and N4≠M4).

According to example 1.2, when search spaces are configured based on multiple numerologies, each numerology's search space is configured based on different numbers of BD candidates, so that it is possible to configure search spaces, in each numerology, in different sizes. As a result of this, it is possible to increase the number of users (UEs) that can be scheduled at the same time, and reduce the loss of resource efficiency. For example, for numerologies for providing services in which the rate of transmission per user is low, such as mMTC, large numbers of BD candidates can be configured, and, for numerologies for providing services of high efficiency, such as eMB, small numbers of BD candidates can be configured.

### [Example 1.3]

According to example 1.3 of the present invention, different CRC/C-RNTI lengths are defined for different numerologies.

The same supported ALs are defined between different numerologies. Also, at a given AL, the same numbers of BD candidates are defined between different numerologies. On the other hand, different CRC/C-RNTI lengths are defined between different numerologies.

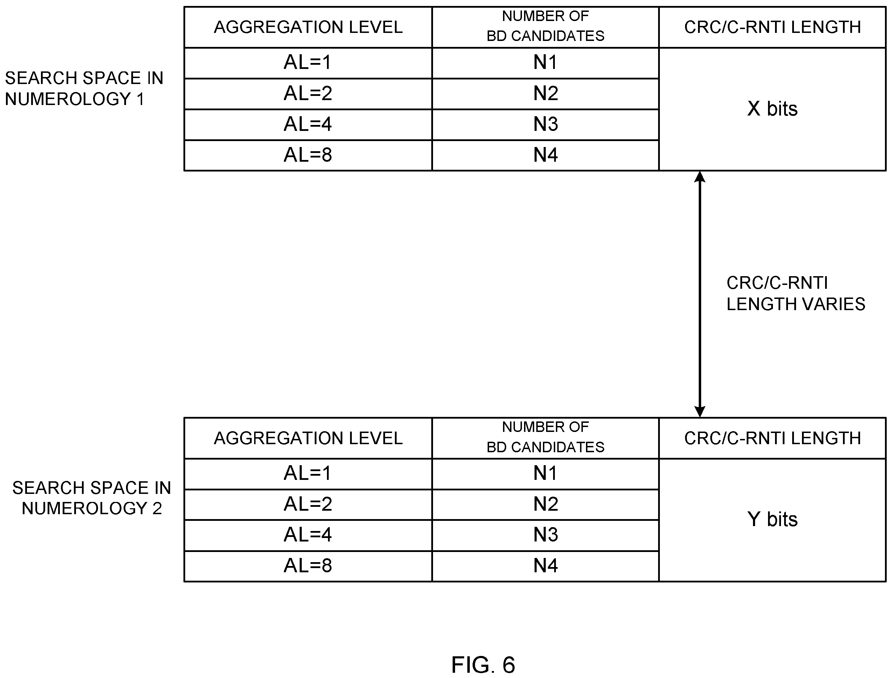

FIG. 6 is a diagram to show examples of search space-related parameters according to example 1.3. As for the supported ALs 1, 2, 4, and 8 are defined alike in each of the two numerologies. Also, in each numerology, the same number of BD candidates are defined at the same AL. The numbers of BD candidates in FIG. 6 are configured so that N1 is for AL = 1, N2 for AL = 2, N3 for AL = 4, N4 for AL = 8.

The CRC/C-RNTI length is defined to be X bits in numerology 1, and Y bits (Y≠X) in numerology 2.

According to example 1.3, the CRC part of DCI is configured different bit lengths per numerology, so that it is possible to make the overhead of DCI vary between numerologies. For example, for numerologies for providing services that require high reliability, such as URLLC, it is possible to improve the accuracy of error detection by configuring the number of CRC bits large, and, for numerologies for providing highly efficient services such as eMBB, it is possible to reduce overhead by configuring the number of CRC bits small.

### [Example 1.4]

Example 1.4 of the present invention combines embodiment 1.1 and embodiment 1.2. example 1.4 defines different supported ALs for each different numerology. Also, in different numerologies, different numbers of BD candidates are defined at a predetermined AL. That is, for the same AL, the number of BD candidates is defined differently between different numerologies. Note that the same CRC/C-RNTI length is defined between different numerologies.

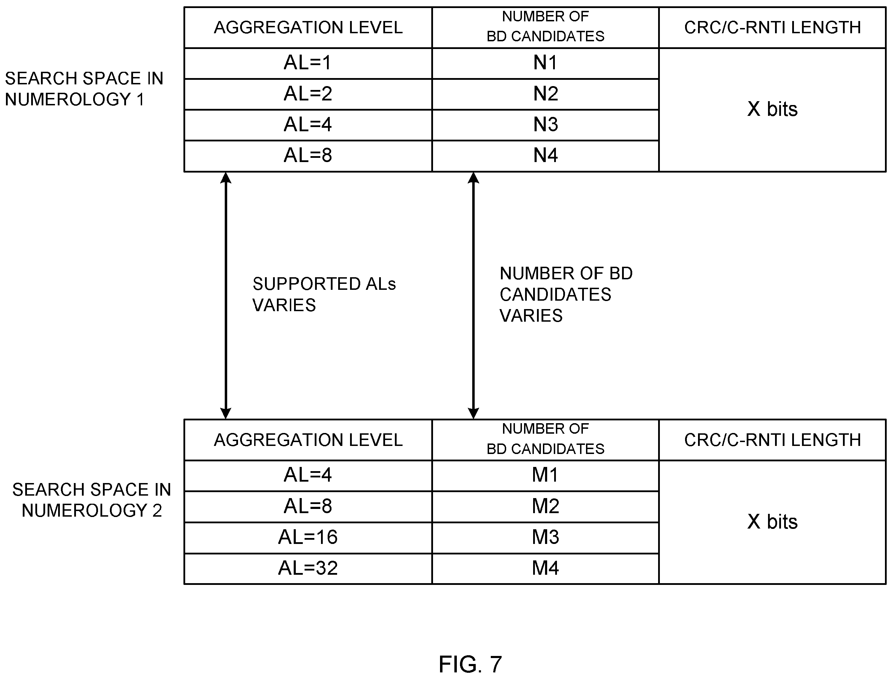

FIG. 7 is a diagram to show examples of search space-related parameters according to example 1.4. The ALs that are supported in numerology 1 are 1, 2, 4, and 8. On the other hand, numerology 2 supports the ALs 4, 8, 16 and 32.

For the numbers of BD candidates for numerology 1, N1, N2, N3 and N4 are configured for ALs = 1, 2, 4 and 8. For the numbers of BD candidates for numerology 2, M1, M2, M3 and M4 are configured for ALs = 4, 8, 16 and 32.

In this case, different numbers of BD candidates (N3≠M1 and N4≠M2) apply to ALs that are common between the two numerologies. Also, no special limitations need to be set on the number of BD candidates (here, N1, N2, M3 and M4) for ALs that are not common between the two numerologies.

Also, the same CRC/C-RNTI length, X bits, is defined in each of the two numerologies.

According to example 1.4, the supported ALs and the numbers of BD candidates are changed between search spaces of different numerologies, so that it is possible to improve reliability, reduce the loss of resource efficiency, and increase the number of users that can be scheduled at the same time.

### Example 1.5]

Example 1.5 of the present invention combines embodiment 1.1 and example 1.3. Embodiment 1.5 defines different supported ALs for different numerologies. Also, different CRC/C-RNTI lengths are defined for each different numerology. Note that, at a given AL, the same numbers of BD candidates are defined between different numerologies.

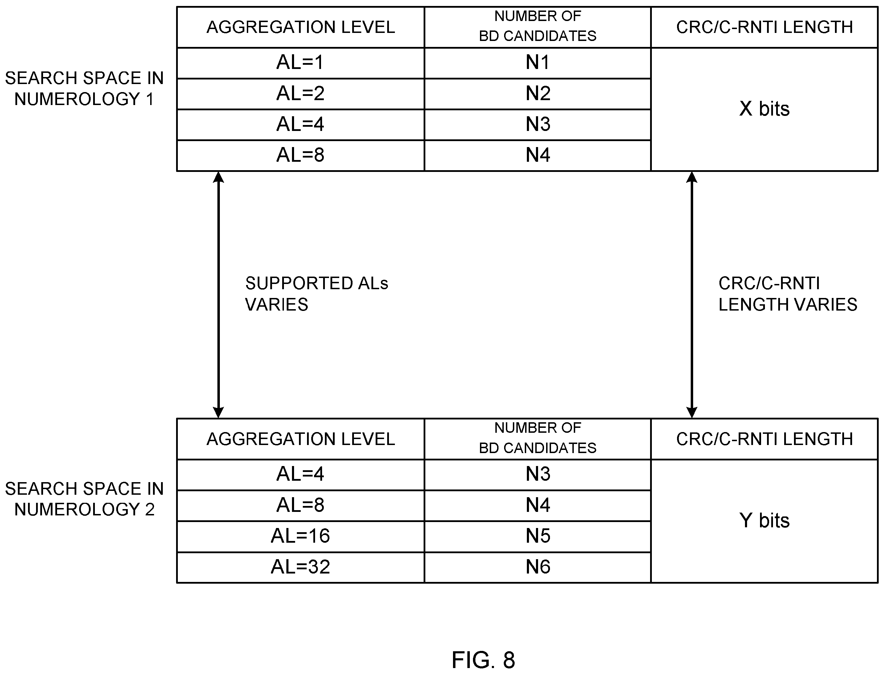

FIG. 8 is a diagram to show examples of search space-related parameters according to example 1.4. The ALs that are supported in numerology 1 are 1, 2, 4, and 8. On the other hand, the ALs that are supported in numerology 2 are 4, 8, 16 and 32.

Also, in each numerology, the number of BD candidates for AL = 4 is N3, and the number of BD candidates for AL = 8 is N4. No special limitations need to be set on the number of BD candidates (here, N1, N2, N5 and N6) for ALs that are not common between the two numerologies.

The CRC/C-RNTI length is defined to be X bits in numerology 1, and Y bits (Y≠X) in numerology 2.

According to example 1.5, the supported ALs and the number of CRC bits are changed between search spaces of different numerologies, so that it is possible to improve reliability, reduce the loss of resource efficiency, and reduce overhead.

### [Example 1.6]

Example 1.6 of the present invention combines example 1.2 and example 1.3. Example 1.6 defines different numbers of BD candidates for each predetermined AL of different numerologies. Also, different CRC/C-RNTI lengths are defined for each different numerology. Note that the same supported ALs are defined between different numerologies.

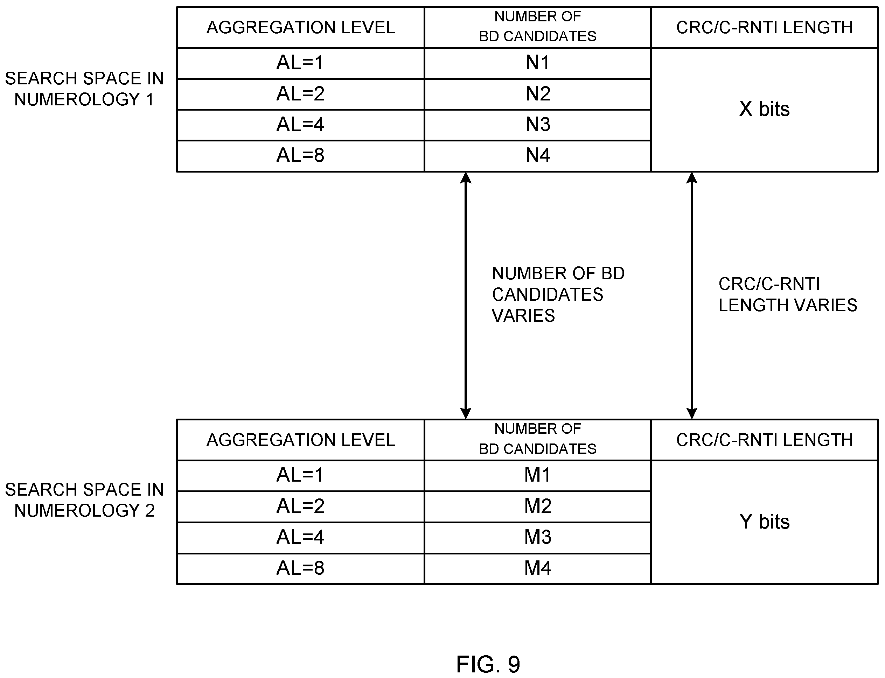

FIG. 9 is a diagram to show examples of search space-related parameters according to example 1.6. As for the supported ALs 1, 2, 4, and 8 are defined alike in each of the two numerologies.

At ALs = 1, 2, 4 and 8, the numbers of BD candidates in numerology 1 are set to N1, N2, N3 and N4, while the numbers of BD candidates in numerology 2 are set to M1, M2, M3 and M4 (for example, N1≠M1, N2≠M2, N3≠M3 and N4≠M4).

The CRC/C-RNTI length is defined to be X bits in numerology 1, and Y bits (Y≠X) in numerology 2.

According to example 1.6, the number of BD candidates to be supported and the number of CRC bits are changed between search spaces of different numerologies, so that it is possible to increase the number of users that can be scheduled at the same time, and, furthermore, reduce overhead.

### [Example 1.7]

Example 1.7 of the present invention combines example 1.1, 1.2

and 1.3. Example 1.7 defines different supported ALs for different numerologies. Also, different numbers of BD candidates are defined for each predetermined AL of different numerologies. Also, different CRC/C-RNTI lengths are defined for different numerologies.

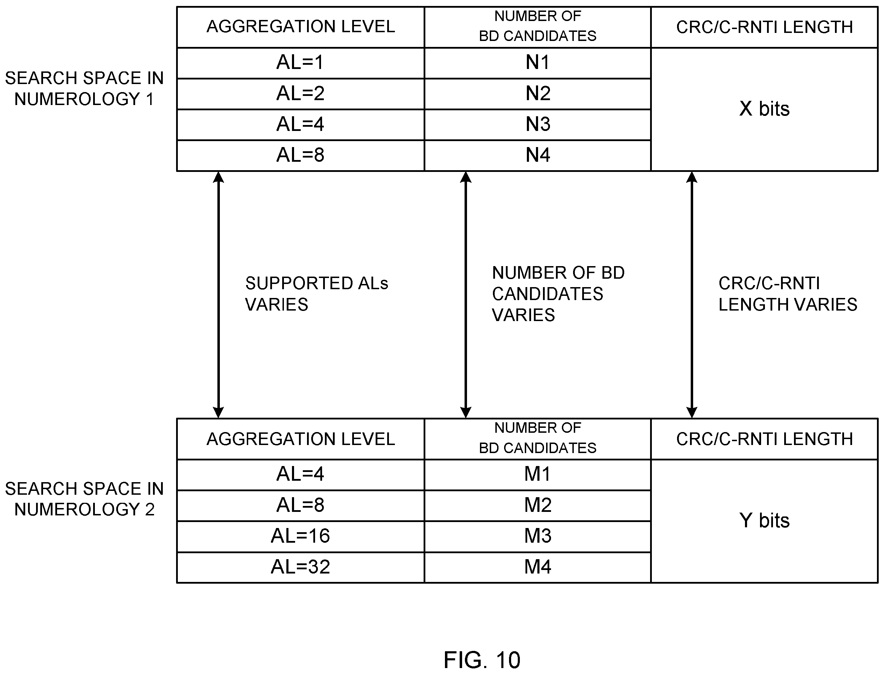

FIG. 10 is a diagram to show examples of search space-related parameters according to example 1.7. The ALs that are supported in numerology 1 are 1, 2, 4, and 8. On the other hand, the ALs that are supported in numerology 2 are 4, 8, 16 and 32.

At ALs = 1, 2, 4 and 8, the numbers of BD candidates in numerology 1 are set to N1, N2, N3 and N4. At ALs = 4, 8, 16 and 32, the numbers of BD candidates in numerology 2 are set to M1, M2, M3 and M4.

In this case, different numbers of BD candidates (N3≠M1 and N4≠M2) apply to ALs that are common between the two numerologies. Also, no special limitations need to be set on the number of BD candidates (here, N1, N2, M3 and M4) for ALs that are not common between the two numerologies.

The CRC/C-RNTI length is defined to be X bits in numerology 1, and Y bits (Y≠X) in numerology 2.

According to example 1.7, the ALs that are supported, the number of BD candidates and the number of CRC bits are changed between search spaces of different numerologies, so that it is possible to improve reliability, reduce the loss of resource efficiency, increase the number of users that can be scheduled at the same time, and, furthermore, reduce overhead.

According to the first example described above, different search space-related parameters can be configured for search spaces that are based on multiple numerologies, so that it is possible to suitably support various use cases that might be anticipated in NR.

Note that, although, in the above description, cases have been shown in which search spaces of one numerology support four ALs, these cases are by no means limiting. For example, the number of ALs supported by search spaces of a predetermined numerology may be less than four, or may be greater than four. In addition, search spaces of multiple numerologies may support different numbers of ALs. Also, although, in the above description, cases have been shown in which UE monitors search spaces of two numerologies, these cases are by no means limiting. For example, UE may monitor search space of three or more different numerologies.

### <Second Example>

If UE can use (for example, monitor) multiple numerologies, signals of different numerologies may be multiplexed. Also, search spaces corresponding to different numerologies may be multiplexed.

For example, in a single carrier, signals and/or search spaces of multiple numerologies may be time-division-multiplexed (TDM), or frequency-division-multiplexed (FDM). In other words, the UE may monitor different search spaces at different times in the same frequency resource, or monitor different search spaces at different frequencies in the same time resource (at the same timing).

Also, signals and/or search spaces of multiple numerologies may be code-division-multiplexed (CDM) and/or space-division-multiplexed (SDM) over the same time and frequency resource.

Also, signals and/or search spaces of multiple numerologies may be frequency-division-multiplexed (FDM) using multiple carriers. Signals and/or search spaces of multiple numerologies may be multiplexed by using one or more carriers, and by combining at least two of TDM, FDM, CDM and SDM.

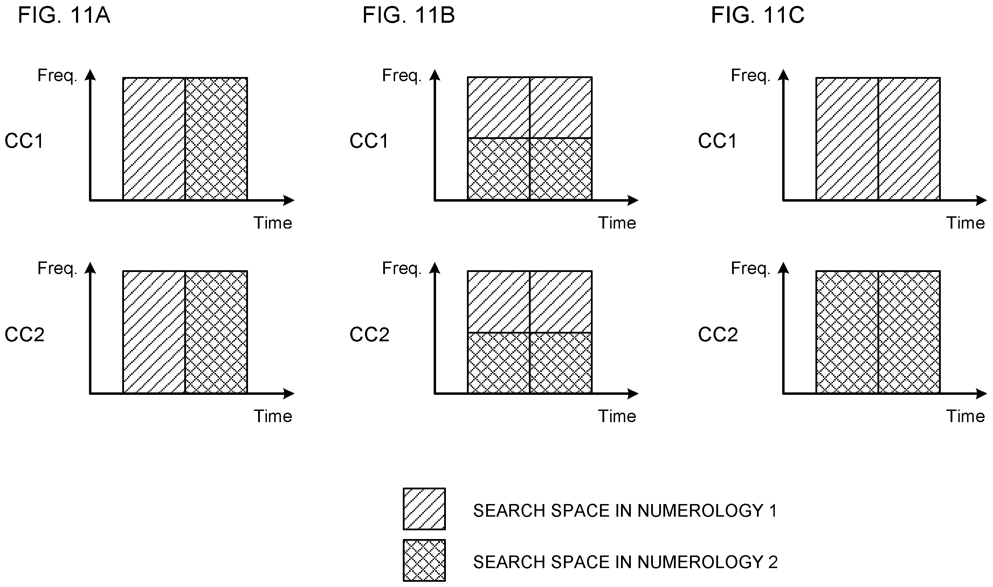

FIGs. 11 provide diagrams to show examples in which signals of multiple numerologies are time-division-multiplexed (TDM)/frequency-division-multiplexed (FDM). FIGs. 11 show radio resources for signals of multiple numerologies (numerology 1 and numerology 2) in different frequency carriers (CC 1 and CC 2). The UE may perform blind-decoding in each numerology's resource assuming that search space-related parameters such as those described in the first embodiment are used.

FIG. 11A shows an example where signals/search spaces of multiple numerologies are time-division-multiplexed (TDM) in one carrier. For example, it is possible to assume different search spaces for every predetermined period (one subframe, one TTI, a predetermined number of symbols, etc.). In this case, the UE may perform blind-decoding by assuming different parameters every predetermined period.

Note that, although FIG. 11A shows an example in which the timing for switching search spaces is the same in a plurality of CCs, this is by no means limiting, and it is equally possible to switch search spaces at different timing in every CC. Also, although an example has been shown in which UE monitors multiple search spaces in continuous time resources, this is by no means limiting, and the UE may monitor multiple search spaces in discontinuous time resources.

FIG. 11B shows an example in which signals/search spaces of multiple numerologies are frequency-division-multiplexed (FDM) in one carrier. In this case, the UE may perform blind-decoding, in the same period, by assuming different parameters for every predetermined frequency band.

Note that, while FIG. 11B shows an example in which search spaces of multiple CCs have the same frequency bandwidth, this is by no means limiting, and it is equally possible to change the frequency bandwidth of search spaces differently per CC. Also, although examples have been shown in which UE monitors multiple search spaces in continuous frequency resources, this is by no means limiting, the UE may monitor multiple search spaces in discontinuous frequency resources.

FIG. 11C shows an example in which signals/search spaces of multiple numerologies are frequency-division-multiplexed (FDM) in two carriers. In this case, UE may perform blind-decoding in a predetermined carrier (CC1) based on parameters of a predetermined numerology (numerology 1), and perform blind-decoding in the other carrier (CC2) based on parameters of another numerology (numerology 2).

Note that, from the perspective of the UE, as shown in FIG. 11C, it is preferable to frequency-division-multiplex (FDM) different numerologies in multiple carriers (using a single numerology per carrier) because this will lead to reduced processing load.

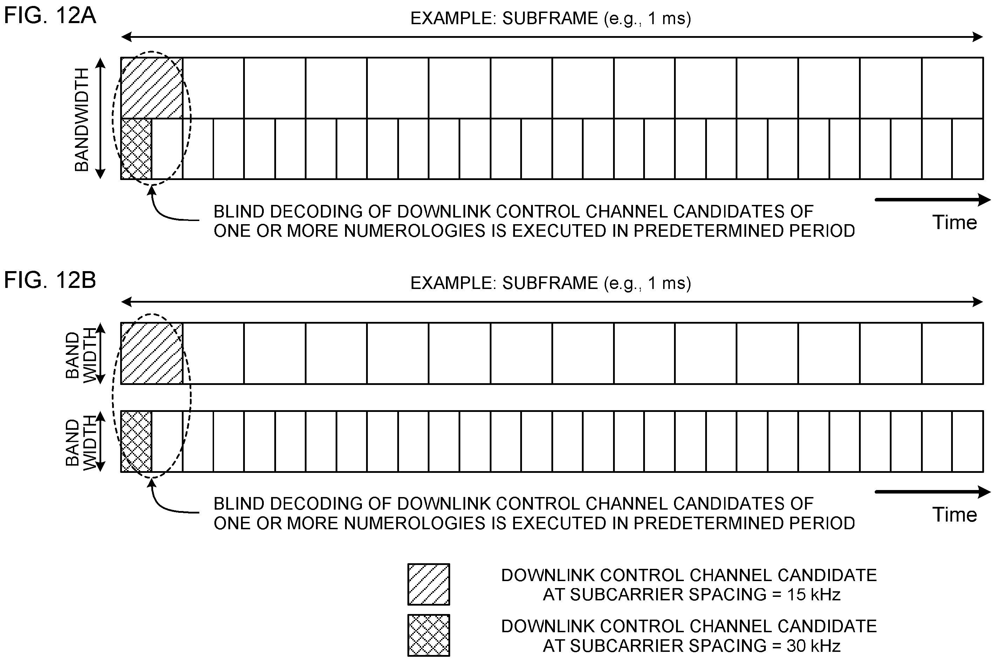

FIGs. 12 are diagrams to show examples of downlink control channel candidates, which might be used when multiple numerologies are used. FIGs. 12 each show a predetermined range of radio resources in a given carrier. In this example, one subframe (for example, one ms) and a predetermined bandwidth are shown, defining the "predetermined range." The predetermined bandwidth may be the system bandwidth or may be a subband, a predetermined number of resource blocks and so on.

An example of FIG. 12A corresponds to FIG. 11B, where the UE blind-decodes, simultaneously, multiple downlink control channel candidates that are frequency-division-multiplexed in the same carrier (CC, bandwidth, etc.). The example of FIG. 12B corresponds to FIG. 11C, where UE simultaneously blind-decodes Multiple downlink control channel candidates that are frequency-division-multiplexed (FDM) in different carriers (CCs, bandwidths, etc.).

Note that these examples illustrate cases in which downlink control channel candidates of multiple numerologies are transmitted and received at the same timing/cycle, these cases are by no means limiting. Prospective downlink control channels of multiple numerologies may be transmitted and received at different timings, or may be transmitted and received in different cycles. For example, referring to FIGs. 12A and 12B, the downlink control channel candidate when the SCS is 15 kHz may be blind-decoded once every 1 ms (fourteen symbols), but the downlink control channel candidate when the SCS is 30 kHz may be blind-decoded once every 0.5 ms (fourteen symbols).

According to the second example described above, UE can properly receive signals of multiple numerologies that are multiplexed.

### <Third Embodiment>

A third embodiment of the present invention relates to the method of selecting the search spaces and numerologies to monitor.

Note that information related to search spaces based on predetermined numerologies, such as those described above with the first embodiment, may be defined in advance in the specification, or may be reported to (configured in, indicated to, etc.) UE by using higher layer signaling (for example, radio resource control (RRC) signaling, broadcast information (including, for example, the master information block (MIB), system information blocks (SIBs), etc.), MAC (Medium Access Control) signaling, and so forth), physical layer signaling (for example, DCI) and/or other signals, or by combining these.

For example, information about a search space of a predetermined numerology may represent at least one of the ALs supported in this numerology, the numbers of BD candidates at predetermined ALs, or the CRC/C-RNTI length. Also, when providing information about a search space of a predetermined numerology like this, for example, by higher layer, cell-specific information, UE-specific information, or information that is specific to a number of UE groups may be configured.

Also, information related to configurations for multiplexing of signals of multiple numerologies, and/or information related to configurations for multiplexing search spaces of multiple numerologies, such as those described above with the second embodiment, may be defined in the specification in advance, or may be reported to UE by using higher layer signaling (for example, RRC signaling), physical layer signaling (for example, DCI) and/or other signals, or by combining these.

Note that, when the number of BDs per predetermined period (for example, one subframe) is determined (limited) in advance, UE may divide this number of BDs and find the number of BDs per search space, assuming that search spaces based on multiple numerologies are used. Such division is suitable when, for example, search spaces of numerologies to be monitored are frequency-division-multiplexed (FDM).

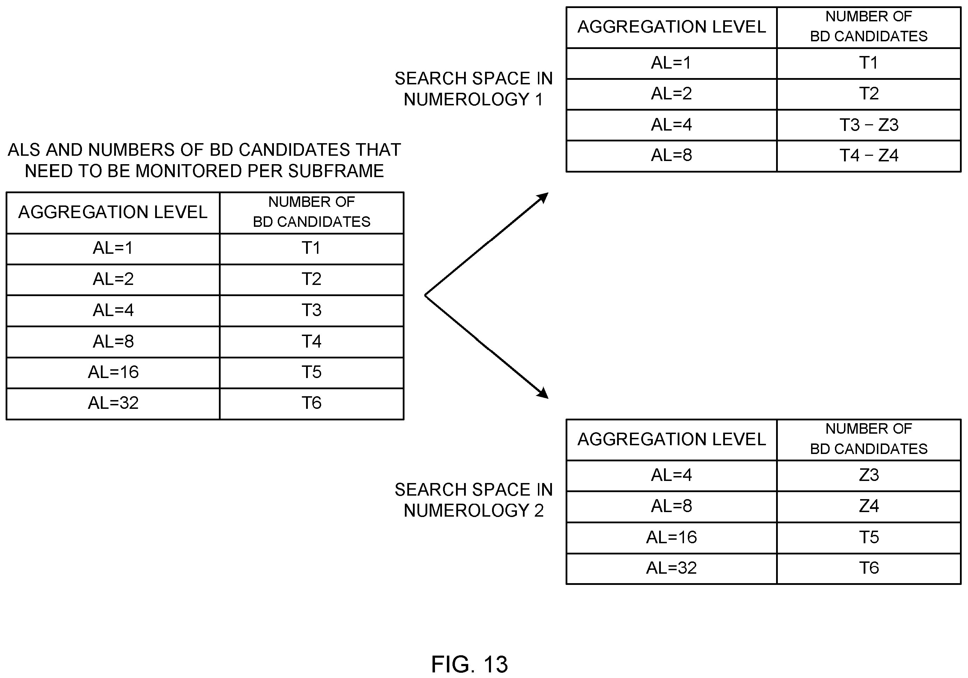

FIG. 13 is a diagram to show examples of selecting multiple search space-related parameters when the number of BDs is limited. In this example, the UE determines the ALs that need to be monitored in each subframe, and the number of BD candidates at each AL. To be more specific, the number of BD candidates is T1 at AL = 1, T2 at AL = 2 and T3 at AL = 4, T4 at AL = 8, T5 at AL = 16, and T6 at AL = 32.

Here, when numerology 1, in which the supported ALs are 1, 2, 4 and 8, and numerology 2, in which the supported ALs are 4, 8, 16 and 32, are configured for the UE, as shown in FIG. 13, the UE can select search space-related parameters for each numerology.

To be more specific, the UE can judge that the numbers of BD candidates in numerology 1 are T1, T2, T3-Z3 and T4-Z4 for ALs = 1, 2, 4 and 8, respectively, and that the numbers of BD candidates in numerology 2 are Z3, Z4, T5 and T6 for ALs = 4, 8, 16 and 32, respectively.

In this case, it is not necessary to report all the numbers of BD candidates that correspond to each numerology's search space, to the UE. For example, the UE can select the number of BD candidates corresponding to each AL if only the supported ALs in numerology 1, the supported ALs in numerology 2 and the ALs that are common in multiple numerologies (Z3 and Z4 in FIG. 13) are reported.

The number of BD candidates does not have to be divided evenly. For example, the numbers of BD candidates for the same AL need not be uniform (for example, Z3≠(T3/2) may be possible), the total number of BD candidates per numerology needs not be uniform (for example, T1+T2+T3-Z3+T4-Z4≠Z3+Z4+T5+T6 may be possible).

Note that the ALs that need to be monitored per predetermined period (which is, for example, one subframe) and/or the number of BD candidates at each AL may be configured in the UE, via higher layer signaling, for example.

The UE may select the numerologies to be monitored as follows. For example, the UE may receive information related to one or more numerologies that are supported in the network (for example, supported by the base station) in broadcast information, and monitor all numerologies indicated by this information. The UE may also monitor, among one or more numerologies that are supported in the network (for example, supported by the base station), a subset of numerologies that is configured via higher layer signaling (for example, RRC signaling).

According to the third example described above, the UE can appropriately judge the search space to be monitored, numerology, and the like.

### (Fourth Embodiment)

A fourth embodiment of the present invention relates to the association between the numerology in which a downlink control channel (downlink control information transmitted therein) is detected and the numerology which is applied to signals (for example, downlink or uplink data) scheduled by that downlink control information.

The UE may assume that downlink control information that is detected in a specific numerology schedules DL or UL data based on the same numerology. In this case, based on the numerology that is used to detect the downlink control information, the UE may specify the numerology to use for DL receipt or UL transmission that is scheduled by this downlink control information.

Also, the UE may assume that downlink control information detected in a specific numerology schedules DL or UL data based on different numerologies. In this case, based on information that is contained in this downlink control information, the UE may specify the numerology to use for DL receipt or UL transmission that is scheduled by this downlink control information.

For example, a predetermined field contained in the downlink control information may be information for specifying the numerology of scheduling-target data (specifying information). Also, the association (table) between this specifying information and prospective numerologies may be configured in the UE by higher layer signaling, and the UE may specify the numerology for the scheduling data based on the specifying information provided in the downlink control information and the table that is configured.

Also, the UE may specify the numerology to use for DL receipt or UL transmission, scheduled by downlink control information detected in a specific numerology, based on predetermined rules.

For example, if DL receipt or UL transmission is scheduled to overlap a predetermined radio resource (for example, at least one of a predetermined frequency domain and a predetermined time domain), the UE may receive or transmit this DL receipt or UL transmission in a specific numerology, and, otherwise, the UE may receive or transmit this DL receipt or UL transmission in a numerology apart from the specific numerology Note that the above predetermined rules may be reported to the UE by way of, for example, higher layer signaling.

Here, above the predetermined radio resource may be a frequency and/or time resource where, for example, a synchronization signal is allocated. In this case, DL receipt or UL transmission may be carried out based on the same numerology as that of the synchronization signal, so that these numerologies can be unified, and as a consequence, it is possible to prevent time and/or frequency domains, where numerologies are redundant (also referred to as "guard bands," "guard periods," etc.), from being produced, even when different numerologies are used.

Note that, although an example has been described above where numerologies for DL or UL data are identified, numerologies for signals, channels and so on other than data may be identified as well. For example, when downlink control information to schedule DL data is detected in a numerology, the UE may use the same numerology and transmit HARQ-ACK in response to this DL data in an uplink control channel. In this case, the UE may specify the numerology to use to send feedback in response to DL receipt or UL transmission scheduled by the downlink control information from the numerology used to detect that downlink control information.

Furthermore, the UE may specify the numerology to use to transmit or receive HARQ-ACK in response to DL data or UL data scheduled by the downlink control information from information that is contained in that downlink control information.

For example, a predetermined field contained in the downlink control information may serve as information for specifying the numerology to be applied to HARQ-ACK for the scheduling target data. Also, the UE may specify the numerology to use to transmit or receive HARQ-ACK in response to DL data or UL data that is scheduled by downlink control information detected in a specific numerology based on predetermined rules.

For example, if the resource that is used to transmit or receive HARQ-ACK overlaps a predetermined radio resource (for example, at least one of a predetermined frequency domain and a predetermined time domain), the UE may transmit or receive this HARQ-ACK in a specific numerology, and, otherwise, the UE may receive or transmit this HARQ-ACK in a numerology apart from the specific numerology. Note that the above predetermined rules may be reported to the UE by way of, for example, higher layer signaling.

Note that the numerology applied to data and the numerology that is used to transmit/receive HARQ-ACK in response to this data may be different, or may be the same.

According to the fourth embodiment described above, UE can appropriately select numerologies for signals that are transmitted and/or received after downlink control information is detected in a given search space.

### (Radio Communication System)

Now, the structure of the radio communication system according to one embodiment of the present invention will be described below. In this radio communication system, communication is performed using one or a combination of the radio communication methods according to the herein-contained embodiments of the present invention.

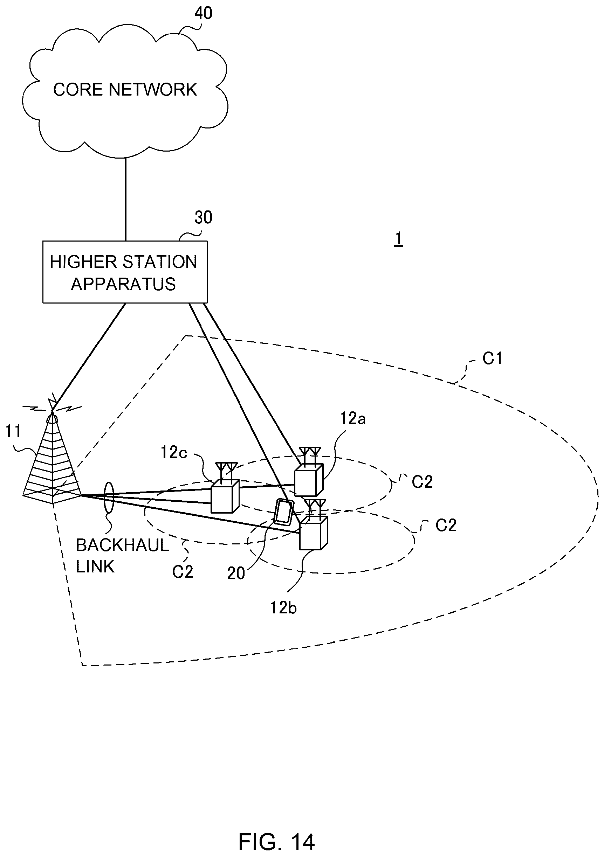

FIG. 14 is a diagram to show an exemplary schematic structure of a radio communication system. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th Generation mobile communication system)," "FRA (Future Radio Access)," "New-RAT (Radio Access Technology)" "NR (New Radio)," and so on, or may be seen as a system to implement these.

The radio communication system 1 includes a radio base station 11 that forms a macro cell C1, with a relatively wide coverage, and radio base stations 12a to 12c that are placed within the macro cell C1 and that form small cells C2, which are narrower than the macro cell C1. Also, user terminals 20 are placed in the macro cell C1 and in each small cell C2. The arrangement of cells and user terminals 20 is not limited to that shown in the drawing.

The user terminals 20 can connect with both the radio base station 11 and the radio base stations 12. The user terminals 20 may use the macro cell C1 and the small cells C2 at the same time by means of CA or DC. Furthermore, the user terminals 20 may apply CA or DC using a plurality of cells (CCs) (for example, five or fewer CCs or six or more CCs).

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Note that the structure of the frequency band for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between two radio base stations 12).

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals (mobile stations) or stationary communication terminals (fixed stations).

In the radio communication system 1, as radio access schemes, orthogonal frequency division multiple access (OFDMA) is applied to the downlink, and single-carrier frequency division multiple access (SC-FDMA) is applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to this combination, and other radio access schemes may be used as well.

The radio communication system 1 may be structured so that different numerologies are applied within cells and/or between cells. Note that, a numerology refers to, for example, a communication parameter (for example, subcarrier spacing, bandwidth, etc.) that is applied to transmit and receive a certain signal.

In the radio communication system 1, a downlink shared channel (PDSCH (Physical Downlink Shared CHannel)), which is used by each user terminal 20 on a shared basis, a broadcast channel (PBCH (Physical Broadcast CHannel)), downlink L1/L2 control channels and so on are used as downlink channels. User data, higher layer control information and SIBs (System Information Blocks) are communicated in the PDSCH. Also, the MIB (Master Information Block) is communicated in the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI), including PDSCH and PUSCH scheduling information, is communicated by the PDCCH. The number of OFDM symbols to use for the PDCCH is communicated by the PCFICH. HARQ (Hybrid Automatic Repeat reQuest) delivery acknowledgment information (also referred to as, for example, "retransmission control information," "HARQ-ACK," "ACK/NACK," etc.) in response to the PUSCH is transmitted by the PHICH. The EPDCCH is frequency-division-multiplexed with the PDSCH (downlink shared data channel) and used to communicate DCI and so on, like the PDCCH.

In the radio communication system 1, an uplink shared channel (PUSCH (Physical Uplink Shared CHannel)), which is used by each user terminal 20 on a shared basis, an uplink control channel (PUCCH (Physical Uplink Control CHannel)), a random access channel (PRACH (Physical Random Access CHannel)) and so on are used as uplink channels. User data, higher layer control information and so on are communicated by the PUSCH. Also, downlink radio quality information (CQI (Channel Quality Indicator)), delivery acknowledgement information and so on are communicated by the PUCCH. By means of the PRACH, random access preambles for establishing connections with cells are communicated.

In the radio communication system 1, cell-specific reference signals (CRSs), channel state information reference signals (CSI-RSs), demodulation reference signals (DMRSs), positioning reference signals (PRSs) and so on are communicated as downlink reference signals. Also, in the radio communication system 1, measurement reference signals (SRS (Sounding Reference Signal)), demodulation reference signal (DMRS) and so on are communicated as uplink reference signals. Note that the DMRS may be referred to as a "user terminal-specific reference signal (UE-specific Reference Signal)." Also, the reference signals to be communicated are by no means limited to these.

### (Radio Base Station)

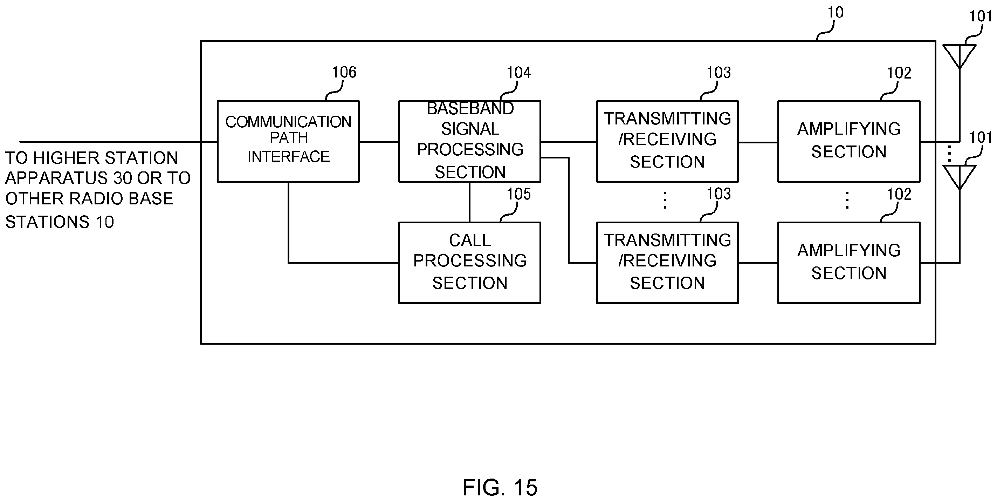

FIG. 15 is a diagram to show an exemplary overall structure of a radio base station. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to transmission processes, including a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted by transmitters/receivers, transmitting/receiving circuits or transmitting/receiving apparatus that can be described based on general understanding of the technical field to which the present invention pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as setting up and releasing communication channels), manages the state of the radio base stations 10 and manages the radio resources.

The communication path interface section 106 transmits and receives signals to and from the higher station apparatus 30 via a predetermined interface. Also, the communication path interface 106 may transmit and receive signals (backhaul signaling) with other radio base stations 10 via an inter-base station interface (which is, for example, optical fiber that is in compliance with the CPRI (Common Public Radio Interface), the X2 interface, etc.).

The transmitting/receiving sections 103 transmit downlink signals (for example, DCI) in relationship to a plurality of communication parameters (numerologies) that relate to frequency domains and/or time domains, in one or more carriers (cells, CCs, and so forth). For example, the transmitting/receiving sections 103 may transmit DCIs that correspond to multiple numerologies, respectively, in the same frequency resource or the same time resource.

Furthermore, the transmitting/receiving sections 103 may transmit, for example, information about search spaces of predetermined numerologies, information related to the configuration for multiplexing of signals of multiple numerologies, information related to the configuration for multiplexing of search spaces of multiple numerologies, information related to the numerologies supported in the network and so on, to the user terminal 20.

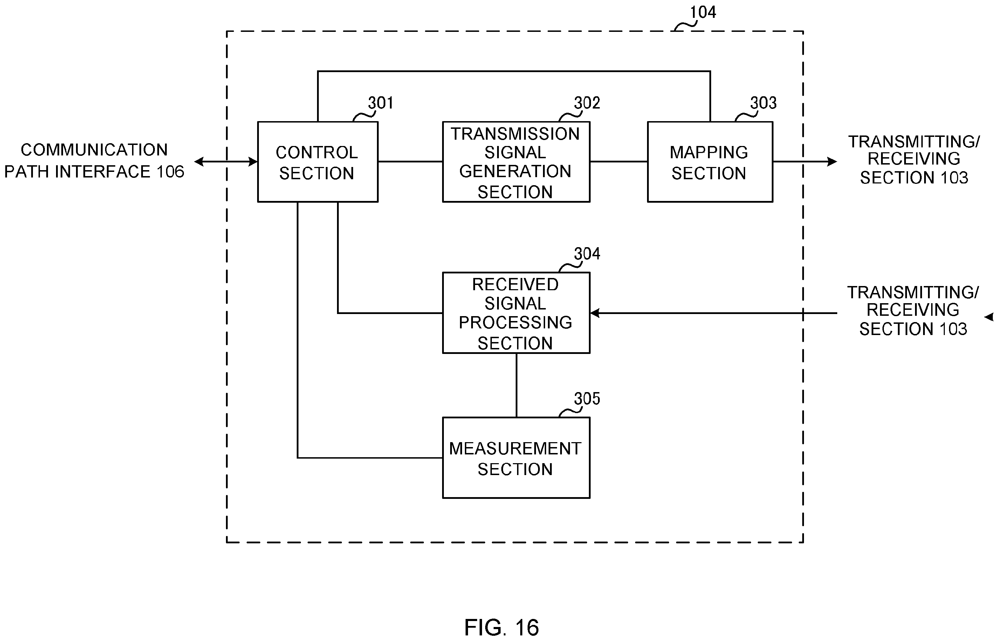

FIG. 16 is a diagram to show an example of a functional structure of a radio base station. Note that, although this example primarily shows functional blocks that pertain to characteristic parts of the present embodiment, the radio base station 10 has other functional blocks that are necessary for radio communication as well.

The baseband signal processing section 104 has a control section (scheduler) 301, a transmission signal generation section 302, a mapping section 303, a received signal processing section 304 and a measurement section 305. Note that these configurations have only to be included in the radio base station 10, and some or all of these configurations may not be included in the baseband signal processing section 104.

The control section (scheduler) 301 controls the whole of the radio base station 10. The control section 301 can be constituted by a controller, a control circuit or control apparatus that can be described based on general understanding of the technical field to which the present invention pertains.

The control section 301, for example, controls the generation of signals in the transmission signal generation section 302, the allocation of signals by the mapping section 303, and so on. Furthermore, the control section 301 controls the signal receiving processes in the received signal processing section 304, the measurements of signals in the measurement section 305, and so on.

The control section 301 controls the scheduling (for example, resource allocation) of system information, downlink data signals (for example, signals transmitted in the PDSCH) and downlink control signals (for example, signals communicated in the PDSCH and/or the EPDCCH). Also, the control section 301 controls the generation of downlink control signals (for example, delivery acknowledgement information and so on), downlink data signals and so on, based on whether or not retransmission control is necessary, which is decided in response to uplink data signals, and so on. Also, the control section 301 controls the scheduling of synchronization signals (for example, the PSS (Primary Synchronization Signal)/SSS (Secondary Synchronization Signal)), downlink reference signals (for example, the CRS, the CSI-RS, the DM-RS, etc.) and so on.

In addition, the control section 301 controls the scheduling of uplink data signals (for example, signals transmitted in the PUSCH), uplink control signals (for example, signals transmitted in the PUCCH and/or the PUSCH), random access preambles transmitted in the PRACH, uplink reference signals, and so on.

The control section 301 may exert control so that transmission of downlink control information (for example, DCI) is controlled with respect to a plurality of numerologies. For example, the control section 301 may configure the user terminal 20, via higher layer signaling and the like, so that the user terminal 20 can judge that at least part of the parameters related to search spaces for monitoring DCI (which may be a downlink control channel) (where these parameters may be referred to as "search space-related parameters," "search space-specifying information," etc.) is different, for each numerology.

The control section 301 may transmit DCI, for each numerology, by using search spaces (PDCCH candidate set, radio resources and so forth), in which at least part of the search space-related parameters is different.

The control section 301 may transmit DCI, for each numerology, by using search spaces, in which at least one of the supported ALs, the number of downlink control channel candidates corresponding to a predetermined AL, and the length of CRC bits attached to DCI, is different, among the search space-related parameters.

The control section 301 may transmit signals and/or search spaces corresponding to multiple numerologies by applying at least one of TDM, FDM, CDN and SDM in one or more carriers (CCs).

The control section 301 may judge that a predetermined signal is transmitted or received in the same numerology as that of DCI that has been transmitted. Based on this transmitted DCI, the control section 301 may judge that a predetermined signal is transmitted or received in a predetermined numerology.

The transmission signal generation section 302 generates downlink signals (downlink control signals, downlink data signals, downlink reference signals and so on) based on commands from the control section 301, and outputs these signals to the mapping section 303. The transmission signal generation section 302 can be constituted by a signal generator, a signal generating circuit or signal generating apparatus that can be described based on general understanding of the technical field to which the present invention pertains.

For example, the transmission signal generation section 302 generates DL assignments, which report downlink signal allocation information, and UL grants, which report uplink signal allocation information, based on commands from the control section 301. Also, the downlink data signals are subjected to the coding process, the modulation process and so on, by using coding rates and modulation schemes that are determined based on, for example, channel state information (CSI) from each user terminal 20.

The mapping section 303 maps the downlink signals generated in the transmission signal generation section 302 to predetermined radio resources based on commands from the control section 301, and outputs these to the transmitting/receiving sections 103. The mapping section 303 can be constituted by a mapper, a mapping circuit or mapping apparatus that can be described based on general understanding of the technical field to which the present invention pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminal 20 (uplink control signals, uplink data signals, uplink reference signals, etc.). For the received signal processing section 304, a signal processor, a signal processing circuit or signal processing apparatus that can be described based on general understanding of the technical field to which the present invention pertains can be used.

The received signal processing section 304 outputs the decoded information, acquired through the receiving processes, to the control section 301. For example, when a PUCCH to contain an HARQ-ACK is received, the received signal processing section 304 outputs this HARQ-ACK to the control section 301. Also, the received signal processing section 304 outputs the received signals and/or the signals after the receiving processes to the measurement section 305.

The measurement section 305 conducts measurements with respect to the received signal. The measurement section 305 can be constituted by a measurer, a measurement circuit or measurement apparatus that can be described based on general understanding of the technical field to which the present invention pertains.

When signals are received, the measurement section 305 may measure, for example, the received power (for example, RSRP (Reference Signal Received Power)), the received quality (for example, RSRQ (Reference Signal Received Quality)), the SINR (Signal to Interference plus Noise Ratio)), uplink channel information (uplink channel information). The measurement results may be output to the control section 301.

### (User Terminal)

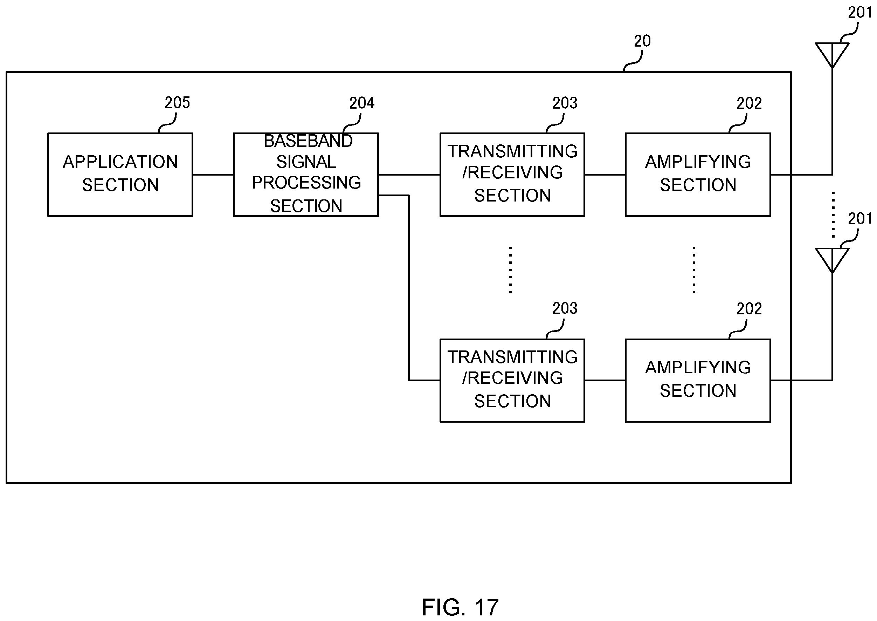

FIG. 17 is a diagram to show an exemplary overall structure of a user terminal. A user terminal 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the downlink signals amplified in the amplifying sections 202. The received signals are subjected to frequency conversion and converted into the baseband signal in the transmitting/receiving sections 203, and output to the baseband signal processing section 204. A transmitting/receiving section 203 can be constituted by a transmitters/receiver, a transmitting/receiving circuit or transmitting/receiving apparatus that can be described based on general understanding of the technical field to which the present invention pertains. Note that a transmitting/receiving section 203 may be structured as a transmitting/receiving section in one entity, or may be constituted by a transmitting section and a receiving section.

The baseband signal processing section 204 performs, for the baseband signal that is input, an FFT process, error correction decoding, a retransmission control receiving process and so on. Downlink user data is forwarded to the application section 205. The application section 205 performs processes related to higher layers above the physical layer and the MAC layer, and so on. Also, in the downlink data, the broadcast information can be also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving sections 203. Baseband signals that are output from the baseband signal processing section 204 are converted into a radio frequency band in the transmitting/receiving sections 203 and transmitted. The radio frequency signals that are subjected to frequency conversion in the transmitting/receiving sections 203 are amplified in the amplifying sections 202, and transmitted from the transmitting/receiving antennas 201.

The transmitting/receiving sections 203 monitor downlink signals (for example DCI) in one or more carriers (cells, CCs), assuming multiple communication parameters (numerologies) related to frequency domains and/or time domains. For example, the transmitting/receiving sections 203 may monitor DCIs that correspond to multiple numerologies, respectively, in the same frequency resource or in the same time resource.

Also, the transmitting/receiving sections 203 may receive, for example, information about search spaces of predetermined numerologies, information related to the configuration for multiplexing of signals of multiple numerologies, information related to the configuration for multiplexing of search spaces of multiple numerologies, information related to the numerologies supported in the network and so on, from the radio base station 10.

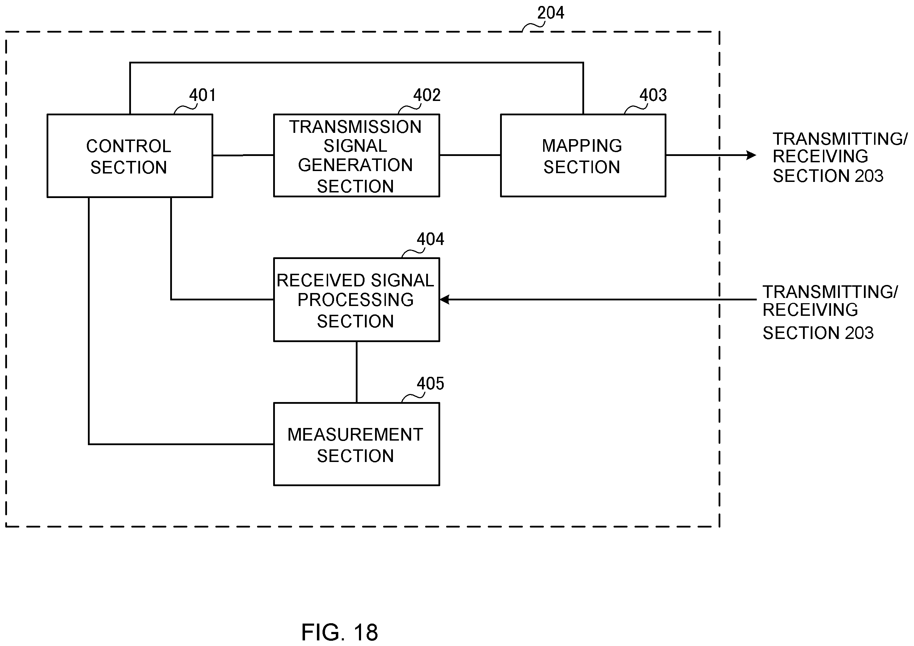

FIG. 18 is a diagram to show an example of a functional structure of a user terminal. Note that, although this example primarily shows functional blocks that pertain to characteristic parts of the present embodiment, the user terminal 20 has other functional blocks that are necessary for radio communication as well.

The baseband signal processing section 204 provided in the user terminal 20 at least has a control section 401, a transmission signal generation section 402, a mapping section 403, a received signal processing section 404 and a measurement section 405. Note that these configurations have only to be included in the user terminal 20, and some or all of these configurations may not be included in the baseband signal processing section 204.

The control section 401 controls the whole of the user terminal 20. For the control section 401, a controller, a control circuit or control apparatus that can be described based on general understanding of the technical field to which the present invention pertains can be used.

The control section 401, for example, controls the generation of signals in the transmission signal generation section 402, the allocation of signals by the mapping section 403, and so on. Furthermore, the control section 401 controls the signal receiving processes in the received signal processing section 404, the measurements of signals in the measurement section 405, and so on.

The control section 401 acquires downlink control signals (for example, signals transmitted in the PDCCH/EPDCCH) and downlink data signals (for example, signals transmitted in the PDSCH) transmitted from the radio base station 10, via the received signal processing section 404. The control section 401 controls the generation of uplink control signals (for example, delivery acknowledgement information and so on) and/or uplink data signals based on whether or not retransmission control is necessary, which is decided in response to downlink control signals and/or downlink data signals, and so on.

The control section 401 may exert control for monitoring downlink control information (for example, DCI) with respect to a plurality of numerologies. For example, the control section 401 judges that at least part of the parameters related to search spaces for monitoring DCI (which may be a downlink control channel) is different, for each numerology.

For each numerology, the control section 401 may judge that at least one of the supported ALs, the number of downlink control channel candidates corresponding to a predetermined AL, and the length of CRC bits attached to DCI, among the search space-related parameters, is different.

The control section 401 may judge that signals and/or search spaces corresponding to multiple numerologies are transmitted based on at least one of TDM, FDM, CDN and SDM, in one or more carriers (CCs), and control receiving processes (including, for example, judging the timing for transmitting/receiving a predetermined signal).

The control section 401 may select the search space-related parameters for each numerology based on the total number of downlink control channel candidates that need to be monitored at each AL.

The control section 401 may judge that a predetermined signal is transmitted or received in the numerology that is assumed to detect DCI.

The control section 401 may judge that a predetermined signal is transmitted or received in a predetermined numerology, based on DCI that is detected. For example, the control section 401 may judge that a predetermined signal is transmitted and received in a predetermined numerology, based on information included in DCI that is detected, and/or the resource scheduled by the detected DCI.

In addition, when various pieces of information reported from the radio base station 10 are acquired from the received signal processing section 404, the control section 401 may update the parameters used for control based on the information.

The transmission signal generation section 402 generates uplink signals (uplink control signals, uplink data signals, uplink reference signals, etc.) based on commands from the control section 401, and outputs these signals to the mapping section 403. The transmission signal generation section 402 can be constituted by a signal generator, a signal generating circuit or signal generating apparatus that can be described based on general understanding of the technical field to which the present invention pertains.

For example, the transmission signal generation section 402 generates uplink control signals related to delivery acknowledgement information, channel state information (CSI) and so on, based on commands from the control section 401. Also, the transmission signal generation section 402 generates uplink data signals based on commands from the control section 401. For example, when a UL grant is included in a downlink control signal that is reported from the radio base station 10, the control section 401 commands the transmission signal generation section 402 to generate an uplink data signal.

The mapping section 403 maps the uplink signals generated in the transmission signal generation section 402 to radio resources based on commands from the control section 401, and outputs the result to the transmitting/receiving sections 203. The mapping section 403 can be constituted by a mapper, a mapping circuit or mapping apparatus that can be described based on general understanding of the technical field to which the present invention pertains.

The received signal processing section 404 performs receiving processes (for example, demapping, demodulation, decoding and so on) of received signals that are input from the transmitting/receiving sections 203. Here, the received signals include, for example, downlink signals (downlink control signals, downlink data signals, downlink reference signals and so on) that are transmitted from the radio base station 10. The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

The received signal processing section 404 outputs the decoded information, acquired through the receiving processes, to the control section 401. The received signal processing section 404 outputs, for example, broadcast information, system information, RRC signaling, DCI and so on, to the control section 401. Also, the received signal processing section 404 outputs the received signals and/or the signals after the receiving processes to the measurement section 405.

The measurement section 405 conducts measurements with respect to the received signals. For example, the measurement section 405 performs measurements using downlink reference signals transmitted from the radio base station 10. The measurement section 405 can be constituted by a measurer, a measurement circuit or measurement apparatus that can be described based on general understanding of the technical field to which the present invention pertains.

The measurement section 405 may measure, for example, the received power (for example, RSRP), the received quality (for example, RSRQ, received SINR), downlink channel information (for example, CSI) and so on of the received signals. The measurement results may be output to the control section 401.

### (Hardware Structure)

Note that the block diagrams that have been used to describe the above embodiments show blocks in functional units. These functional blocks (components) may be implemented in arbitrary combinations of hardware and/or software. Also, the means for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire and/or wireless, for example) and using these multiple pieces of apparatus.

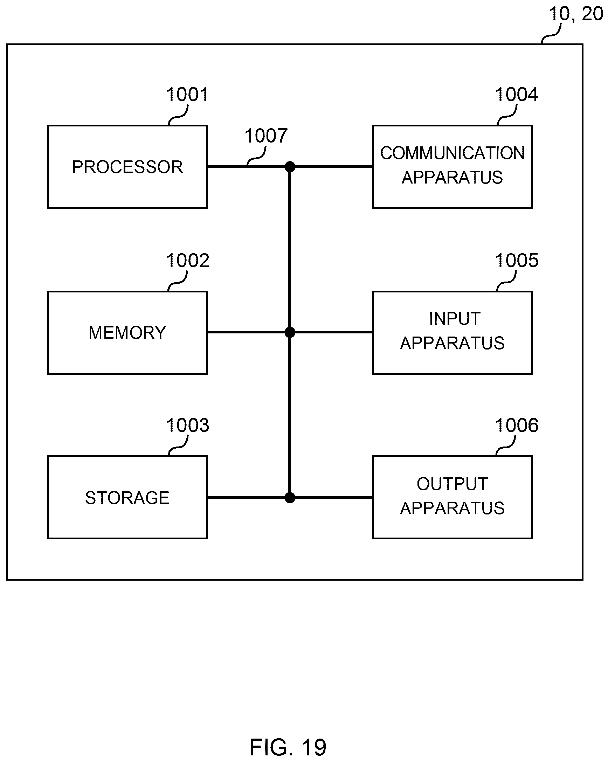

For example, the radio base station, user terminals and so on may function as a computer that executes the processes of the radio communication method of the present invention. FIG. 19 is a diagram to show an example hardware structure of a radio base station and a user terminal according to one embodiment of the present invention. Physically, the above-described radio base stations 10 and user terminals 20 may be formed as a computer apparatus that includes a processor 1001, a memory 1002, a storage 1003, communication apparatus 1004, input apparatus 1005, output apparatus 1006 and a bus 1007.

Note that, in the following description, the word "apparatus" may be replaced by "circuit," "device," "unit" and so on. Note that the hardware structure of a radio base station 10 and a user terminal 20 may be designed to include one or more of each apparatus shown in the drawings, or may be designed not to include part of the apparatus.

For example, although only one processor 1001 is shown, a plurality of processors may be provided. Furthermore, processes may be implemented with one processor, or processes may be implemented in sequence, or in different manners, on one or more processors. Note that the processor 1001 may be implemented with one or more chips.

Each function of the radio base station 10 and the user terminal 20 is implemented by reading predetermined software (program) on hardware such as the processor 1001 and the memory 1002, and by controlling the calculations in the processor 1001, the communication in the communication apparatus 1004, and the reading and/or writing of data in the memory 1002 and the storage 1003.

The processor 1001 may control the whole computer by, for example, running an operating system. The processor 1001 may be configured with a central processing unit (CPU), which includes interfaces with peripheral apparatus, control apparatus, computing apparatus, a register and so on. For example, the above-described baseband signal processing section 104 (204), call processing section 105 and so on may be implemented by the processor 1001.

Furthermore, the processor 1001 reads programs (program codes), software modules, data and so forth from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory (primary storage apparatus)" and so on. The memory 1002 can store executable programs (program codes), software modules and so on for implementing the radio communication methods according to the present invention.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving apparatus) for allowing inter-computer communication by using wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology used in this specification and the terminology that is needed to understand this specification may be replaced by other terms that convey the same or similar meanings. For example, "channels" and/or "symbols" may be replaced by "signals (or "signaling")." Also, "signals" may be "messages." A reference signal may be abbreviated as an "RS," and may be referred to as a "pilot," a "pilot signal" and so on, depending on which standard applies. Furthermore, a "component carrier (CC)" may be referred to as a "cell," a "frequency carrier," a "carrier frequency" and so on.

Furthermore, a radio frame may be comprised of one or more periods (frames) in the time domain. Each of one or more periods (frames) constituting a radio frame may be referred to as a "subframe." Furthermore, a subframe may be comprised of one or more slots in the time domain. Furthermore, a slot may be comprised of one or more symbols in the time domain (OFDM (Orthogonal Frequency Division Multiplexing) symbols, SC-FDMA (Single Carrier Frequency Division Multiple Access) symbols, and so on).

A radio frame, a subframe, a slot, a minislot and a symbol all represent the time unit in signal communication. A radio frame, a subframe, a slot and a symbol may be each called by other applicable names. For example, one subframe may be referred to as a "transmission time interval (TTI)," a plurality of consecutive subframes may be referred to as a "TTI," or one slot may be referred to as a "TTI." That is, a subframe and/or a TTI may be a subframe (1 ms) in existing LTE, may be a shorter period than 1 ms (for example, one to thirteen symbols), or may be a longer period of time than 1 ms. Note that the unit to represent a TTI may be referred to as a "slot," a "mini slot" and so on, instead of a "subframe."

Here, a TTI refers to the minimum time unit of scheduling in radio communication, for example. For example, in LTE systems, a radio base station schedules the radio resources (such as the frequency bandwidth and transmission power that can be used in each user terminal) to allocate to each user terminal in TTI units. Note that the definition of TTIs is not limited to this. The TTI may be the transmission time unit of channel-encoded data packets (transport blocks), code blocks and/or codewords, or may be the unit of processing in scheduling, link adaptation and so on.

A TTI having a time duration of 1 ms may be referred to as a "normal TTI" (TTI in LTE Rel. 8 to 12), a "long TTI," a "normal subframe," a "long subframe," and so on. A TTI that is shorter than a normal TTI may be referred to as a "shortened TTI," a "short TTI," a "shortened subframe," a "short subframe," and so on.

Note that a long TTI (for example, a normal TTI, a subframe, etc.) may be replaced with a TTI having a time duration exceeding 1 ms, and a short TTI (for example, a shortened TTI) may be replaced with a TTI having a TTI length less than the TTI length of a long TTI and not less than 1 ms.

A resource block (RB) is the unit of resource allocation in the time domain and the frequency domain, and may include one or a plurality of consecutive subcarriers in the frequency domain. Also, an RB may include one or more symbols in the time domain, and may be one slot, one subframe or one TTI long. One TTI and one subframe each may be comprised of one or more resource blocks. Note that an RB may be referred to as a "physical resource block (PRB (Physical RB))," a "PRB pair," an "RB pair," and so on.

Furthermore, a resource block may be comprised of one or more resource elements (REs). For example, one RE may be a radio resource field of one subcarrier and one symbol.

Note that the structures of radio frames, subframes, slots, symbols and so on described above are merely examples. For example, configurations pertaining to the number of subframes included in a radio frame, the number of slots included in a subframe, the number of symbols and RBs included in a slot, the number of subcarriers included in an RB, the number of symbols in a TTI, the symbol duration, the length of cyclic prefixes (CPs) and so on can be variously changed.

Also, the information and parameters described in this specification may be represented in absolute values or in relative values with respect to predetermined values, or may be represented in other information formats. For example, radio resources may be specified by predetermined indices. In addition, equations to use these parameters and so on may be used, apart from those explicitly disclosed in this specification.

The names used for parameters and so on in this specification are in no respect limiting. For example, since various channels (PUCCH (Physical Uplink Control CHannel), PDCCH (Physical Downlink Control CHannel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals and so on can be output from higher layers to lower layers and/or from lower layers to higher layers. Information, signals and so on may be input and/or output via a plurality of network nodes.

The information, signals and so on that are input and/or output may be stored in a specific location (for example, a memory), or may be managed using a management table. The information, signals and so on to be input and/or output can be overwritten, updated or appended. The information, signals and so on that are output may be deleted. The information, signals and so on that are input may be transmitted to other pieces of apparatus.

Reporting of information is by no means limited to the aspects described in this specification, and other methods may be used as well. For example, reporting of information may be implemented by using physical layer signaling (for example, downlink control information (DCI), uplink control information (UCI)), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)" and so on. Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

Also, reporting of predetermined information (for example, reporting of information to the effect that "X holds") does not necessarily have to be sent explicitly, and can be sent implicitly (by, for example, not reporting this piece of information, or by reporting a different piece of information).

Decisions may be made in values represented by one bit (0 or 1), may be made in Boolean values that represent true or false, or may be made by comparing numerical values (for example, comparison against a predetermined value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation, microwaves and so on), these wired technologies and/or wireless technologies are also included in the definition of communication media.

The terms "system" and "network" as used herein are used interchangeably.

As used herein, the terms "base station (BS)," "radio base station," "eNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or more (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part or all of the coverage area of a base station and/or a base station subsystem that provides communication services within this coverage.

As used herein, the terms "mobile station (MS)" "user terminal," "user equipment (UE)" and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client" or some other suitable terms.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D (Device-to-Device)). In this case, user terminals 20 may have the functions of the radio base stations 10 described above. In addition, terms such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Certain actions which have been described in this specification to be performed by base stations may, in some cases, be performed by higher nodes (upper nodes). In a network comprised of one or more network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects illustrated in this specification may be applied to systems that use LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark) and other adequate radio communication methods, and/or next-generation systems that are enhanced based on these.

The phrase "based on" as used in this specification does not mean "based only on," unless otherwise specified. In other words, the phrase "based on" means both "based only on" and "based at least on."

Reference to elements with designations such as "first," "second" and so on as used herein does not generally limit the number/quantity or order of these elements. These designations are used only for convenience, as a method of distinguishing between two or more elements. In this way, reference to the first and second elements does not imply that only two elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database or some other data structure), ascertaining and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical or a combination thereof. For example, "connection" may be interpreted as "access." As used herein, two elements may be considered "connected" or "coupled" to each other by using one or more electrical wires, cables and/or printed electrical connections, and, as a number of non-limiting and non-inclusive examples, by using electromagnetic energy, such as electromagnetic energy having wavelengths in radio frequency domains, microwave regions and optical (both visible and invisible) regions.

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described herein. The present invention can be implemented with various corrections and in various modifications, without departing from the scope of the present invention defined by the recitations of claims. Consequently, the description herein is provided only for the purpose of explaining examples.

## Claims

1. A terminal (20) comprising:
a receiving section (203) configured to receive, by higher layer signaling, information about search spaces each corresponding to a numerology representing a number of Physical Downlink Control Channel, PDCCH, candidates per aggregation level, AL, to be used for blind decoding; and
a control section (401) configured to determine the number of PDCCH candidates per AL, based on the information about the search space;
wherein the receiving section (203) is configured to monitor the PDCCH candidates in the search space indicated by the information about the search spaces,
the terminal (20) supports a different number of PDCCH candidates per AL to be monitored per slot depending on the numerology;
wherein the control section (401) is configured to determine, based on a field of detected downlink control information, a numerology used for Physical Downlink Shared Channel, PDSCH, reception or Physical Uplink Shared Channel, PUSCH, transmission based on the downlink control information.

2. The terminal (20) according to claim 1, wherein the receiving section (203) is configured to monitor PDCCH candidates in a first search space corresponding to a first numerology and PDCCH candidates in a second search space corresponding to a second numerology, in one cell at different times, respectively.

3. The terminal (20) according to claim 1, wherein the receiving section (203) is configured to monitor PDCCH candidates in a first search space corresponding to a first numerology in a first cell and PDCCH candidates in a second search space corresponding to a second numerology in a second cell, at a same time.

4. A radio communication method for a terminal (20), comprising:
receiving, by higher layer signaling, information about search spaces each corresponding to a numerology representing a number of Physical Downlink Control Channel, PDCCH, candidates per aggregation level, AL, to be used for blind decoding;
determining the number of PDCCH candidates per AL, based on the information about the search space; and
monitoring the PDCCH candidates in the search space indicated by the information about the search spaces,
wherein the terminal (20) supports a different number of PDCCH candidates per AL to be monitored per slot depending on the numerology; and
the terminal (20) further determines, based on a field of detected downlink control information, a numerology used for Physical Downlink Shared Channel, PDSCH, reception or Physical Uplink Shared Channel, PUSCH, transmission based on the downlink control information.

5. A system (1) comprising a terminal (20) according to any of claims 1 to 3, and a base station (10) comprising:
a control section (201) configured to generate the information about search spaces; and
a transmitting section (103) configured to transmit, by higher layer signaling, the information about the search spaces to the terminal (20).

## Patentansprüche

1. Endgerät (20), umfassend:
einen Empfangsabschnitt (203), der so konfiguriert ist, dass er durch Signalisierung höherer Schichten Informationen über Suchräume empfängt, die jeweils einer Numerologie entsprechen, die eine Anzahl von physischen Downlink-Steuerkanal-, PDCCH, -Kandidaten pro Aggregationsebene, AL, darstellt, die für Blinddekodierung verwendet werden sollen; und
einen Steuerabschnitt (401), der so konfiguriert ist, dass er die Anzahl von PDCCH-Kandidaten pro AL basierend auf Informationen über den Suchraum bestimmt;
wobei der Empfangsabschnitt (203) so konfiguriert ist, dass er die PDCCH-Kandidaten in dem durch die Informationen über die Suchräume angegebenen Suchraum überwacht,
wobei das Endgerät (20) eine unterschiedliche Anzahl von PDCCH-Kandidaten pro AL unterstützt, die abhängig von der Numerologie pro Slot überwacht werden sollen;
wobei der Steuerabschnitt (401) so konfiguriert ist, dass er basierend auf einem Feld der erkannten Downlink-Steuerinformationen eine Numerologie bestimmt, die für Empfang auf einem physischen gemeinsamen Downlink-Kanal, PDSCH, oder Übertragung auf einem physischen gemeinsamen Uplink-Kanal, PUSCH, verwendet wird, basierend auf den Downlink-Steuerinformationen.

2. Endgerät (20) nach Anspruch 1, wobei der Empfangsabschnitt (203) so konfiguriert ist, dass er PDCCH-Kandidaten in einem ersten Suchraum, der einer ersten Numerologie entspricht, und PDCCH-Kandidaten in einem zweiten Suchraum, der einer zweiten Numerologie entspricht, in einer Zelle zu jeweils unterschiedlichen Zeiten überwacht.

3. Endgerät (20) nach Anspruch 1, wobei der Empfangsabschnitt (203) so konfiguriert ist, dass er PDCCH-Kandidaten in einem ersten Suchraum, der einer ersten Numerologie entspricht, in einer ersten Zelle und PDCCH-Kandidaten in einem zweiten Suchraum, der einer zweiten Numerologie entspricht, in einer zweiten Zelle zur gleichen Zeit überwacht.

4. Funkkommunikationsverfahren für ein Endgerät (20), umfassend:
Empfangen durch Signalisierung höherer Schichten von Informationen über Suchräume, die jeweils einer Numerologie entsprechen, die eine Anzahl von physischen Downlink-Steuerkanal-, PDCCH, -Kandidaten pro Aggregationsebene, AL, darstellt, die für Blinddekodierung verwendet werden sollen;
Bestimmen der Anzahl von PDCCH-Kandidaten pro AL basierend auf Informationen über den Suchraum; und
Überwachen der PDCCH-Kandidaten in dem durch die Informationen über die Suchräume angegebenen Suchraum,
wobei das Endgerät (20) eine unterschiedliche Anzahl von PDCCH-Kandidaten pro AL unterstützt, die abhängig von der Numerologie pro Slot überwacht werden sollen; und
das Endgerät (20) weiter, basierend auf einem Feld von erkannten Downlink-Steuerinformationen, eine Numerologie bestimmt, die für Empfang auf einem physischen gemeinsamen Downlink-Kanal, PDSCH, oder Übertragung auf einem physischen gemeinsamen Uplink-Kanal, PUSCH, verwendet wird, basierend auf den Downlink-Steuerinformationen.

5. System (1), umfassend ein Endgerät (20) nach einem der Ansprüche 1 bis 3, und eine Basisstation (10), umfassend:
einen Steuerabschnitt (201), der so konfiguriert ist, dass er die Informationen über Suchräume erzeugt; und
einen Übertragungsabschnitt (103), der so konfiguriert ist, dass er durch Signalisierung höherer Schichten die Informationen über die Suchräume an das Endgerät (20) überträgt.

## Revendications

1. Terminal (20) comprenant :
une section de réception (203) configurée pour recevoir, par signalisation de couche supérieure, des informations relatives à des espaces de recherche correspondant chacun à une numérologie représentant un nombre de candidats de canal de commande de liaison descendante physique, PDCCH, par niveau d'agrégation, AL, devant être utilisés pour un décodage aveugle ; et
une section de commande (401) configurée pour déterminer le nombre de candidats PDCCH par AL, sur la base des informations relatives à l'espace de recherche ;
dans lequel la section de réception (203) est configurée pour surveiller les candidats PDCCH dans l'espace de recherche indiqué par les informations relatives aux espaces de recherche,
le terminal (20) prenant en charge, en fonction de la numérologie, un nombre différent de candidats PDCCH par AL devant être surveillés par créneau ;
dans lequel la section de commande (401) est configurée pour déterminer, sur la base d'un champ d'informations de commande de liaison descendante détectées, une numérologie utilisée pour une réception de canal partagé de liaison descendante physique, PDSCH, ou une transmission de canal partagé de liaison montante physique, PUSCH, sur la base des informations de commande de liaison descendante.

2. Terminal (20) selon la revendication 1, dans lequel la section de réception (203) est configurée pour surveiller des candidats PDCCH dans un premier espace de recherche correspondant à une première numérologie et des candidats PDCCH dans un deuxième espace de recherche correspondant à une deuxième numérologie, dans une même cellule, à des instants différents, respectivement.

3. Terminal (20) selon la revendication 1, dans lequel la section de réception (203) est configurée pour surveiller des candidats PDCCH dans un premier espace de recherche correspondant à une première numérologie dans une première cellule et des candidats PDCCH dans un deuxième espace de recherche correspondant à une deuxième numérologie dans une deuxième cellule, au même instant.

4. Procédé de communication radio pour un terminal (20), comprenant :
une réception, par signalisation de couche supérieure, d'informations relatives à des espaces de recherche correspondant chacun à une numérologie représentant un nombre de candidats de canal de commande de liaison descendante physique, PDCCH, par niveau d'agrégation, AL, devant être utilisés pour un décodage aveugle ;
une détermination du nombre de candidats PDCCH par AL, sur la base des informations relatives à l'espace de recherche ; et
une surveillance des candidats PDCCH dans l'espace de recherche indiqué par les informations relatives aux espaces de recherche,
dans lequel le terminal (20) prend en charge, en fonction de la numérologie, un nombre différent de candidats PDCCH par AL devant être surveillés par créneau ; et
dans lequel le terminal (20) détermine en outre, sur la base d'un champ d'informations de commande de liaison descendante détectées, une numérologie utilisée pour une réception de canal partagé de liaison descendante physique, PDSCH, ou une transmission de canal partagé de liaison montante physique, PUSCH, sur la base des informations de commande de liaison descendante.

5. Système (1) comprenant un terminal (20) selon l'une quelconque des revendications 1 à 3, et une station de base (10) comprenant :
une section de commande (201) configurée pour générer les informations relatives à des espaces de recherche ; et
une section de transmission (103) configurée pour transmettre au terminal (20), par signalisation de couche supérieure, les informations relatives aux espaces de recherche.
